# EUROPEAN PATENT APPLICATION

(11) **EP 3 827 674 A1**
(43) Date of publication of application: **02.06.2021**
(21) Application number: 19840317.2
(22) Date of filing: 17.07.2019
(51) Int. Cl.: A23L 29/30, C08B 30/18, A23F 3/16

(54) **HIGH-DISPERSIBILITY DEXTRIN POWDER**

(30) Priority: 24.07.2018 JP 2018138862
(71) Applicant: Nutri Co., Ltd., Mie 510-0013 (JP)
(72) Inventor: UWAMORI, Shouta, Yokkaichi-shi, Mie 510-0013 (JP); TANIYAMA, Yohei, Yokkaichi-shi, Mie 510-0013 (JP)
(74) Representative: Hoffmann Eitle
(86) International application number: PCT/JP2019/028005
(87) International publication number: WO 2020/022133

(57) **Abstract**

The present invention provides a dextrin powder at a low cost which may be used as a component of thickeners that are good in dispersibility in moisture, etc. A dextrin powder obtainable by spray drying a dextrin solution, wherein dextrin particles with a length to thickness ratio of 3 or more are contained in a proportion of 3% or more (as based on the number of the particles). A thickener comprising the dextrin powder. A food comprising the dextrin powder.

## Description

### TECHNICAL FIELD

The present invention relates to a highly dispersible dextrin powder.

### BACKGROUND ART

Swallowing movement is performed by various nervous systems and muscle systems working in coordination, but this movement may be hindered due to old age or various diseases. Persons with such swallowing disorder may accidentally swallow food not into esophagus but into the respiratory tract or the like (aspiration) with a higher probability compared to healthy persons. This problem of aspiration occurs more frequently in low viscosity liquid foods (e.g., water, soup, moisture-containing food, etc.) than in solid foods. In order to prevent aspiration, thickeners are used which change the texture of liquid foods to sol- or gel-like texture. As such thickeners, polysaccharide thickeners like agar, gelatin, starch, guar gum, xanthan gum, locust bean gum, etc. or combinations thereof have been frequently used (Patent Document No. 1: Japanese Patent No. 4694109).

Currently, thickeners most commonly used in nursing care sites or medical sites are thickeners whose major components are xanthan gum and dextrin. As methods for preparing dextrin particles used in thickeners, two methods are known: the drum dry method in which dextrin solution is dried upon heated drums, and the spray dry method in which dextrin solution is spray-dried. Thickeners containing dextrin particles prepared by the drum dry method (drum dry product; sheet-like shape) are good in dispersibility in moisture, etc. but expensive since the production cost of dextrin particles is high. On the other hand, dextrin particles prepared by the spray dry method (spray dry product; spherical shape) are cheap, but thickeners containing this spray dry product are not good in dispersibility in moisture, etc.

### PRIOR ART LITERATURE

### Patent Documents

Patent Document No. 1: Japanese Patent No. 4694109

### DISCLOSURE OF THE INVENTION

### PROBLEM FOR SOLUTION BY THE INVENTION

It is an object of the present invention to provide dextrin particles at a low cost which may be used as a component of thickeners that are good in dispersibility in moisture, etc.

### MEANS TO SOLVE THE PROBLEM

As a result of extensive and intensive researches, the present inventors have found that it is possible to prepare a dextrin powder containing fibrous dextrin particles at a high concentration by spray drying a highly viscous and highly concentrated aqueous dextrin solution with a spray dryer and that thickeners containing the thus prepared dextrin powder are good in dispersibility in moisture, etc. Based on this finding, the present invention has been achieved.

A summary of the present invention is as described below.
(1) A dextrin powder obtainable by spray drying a dextrin solution, wherein dextrin particles with a length to thickness ratio of 3 or more are contained in a proportion of 3% or more (as based on the number of the particles).
(2) The dextrin powder of (1) above, wherein the dextrin particles with a length to thickness ratio of 3 or more are contained in a proportion of 5% or more (as based on the number of the particles).
(3) The dextrin powder of (2) above, wherein the dextrin particles with a length to thickness ratio of 3 or more are contained in a proportion of 10% or more (as based on the number of the particles).
(4) The dextrin powder of (3) above, wherein the dextrin particles with a length to thickness ratio of 3 or more are contained in a proportion of 15% or more (as based on the number of the particles).
(5) A thickener comprising the dextrin powder of any one of (1) to (4) above.
(6) A food comprising the dextrin powder of any one of (1) to (4) above.

### EFFECT OF THE INVENTION

According to the present invention, a dextrin powder which may be used as a component of thickeners that are good in dispersibility in moisture, etc. can now be prepared at a low cost.

The present specification encompasses the contents disclosed in the specification and/or drawings of Japanese Patent Application No. 2018-138862 based on which the present patent application claims priority.

### BRIEF DESCRIPTION OF THE DRAWINGS

[Fig. 1] This figure shows the distribution of the aspect ratios (length/thickness) of the dextrin particles prepared in Example 1.
[Fig. 2] This figure shows the distribution of the aspect ratios (length/thickness) of the dextrin particles prepared in Example 2.
[Fig. 3] This figure shows the distribution of the aspect ratios (length/thickness) of the dextrin particles prepared and used in Comparative Example 1.

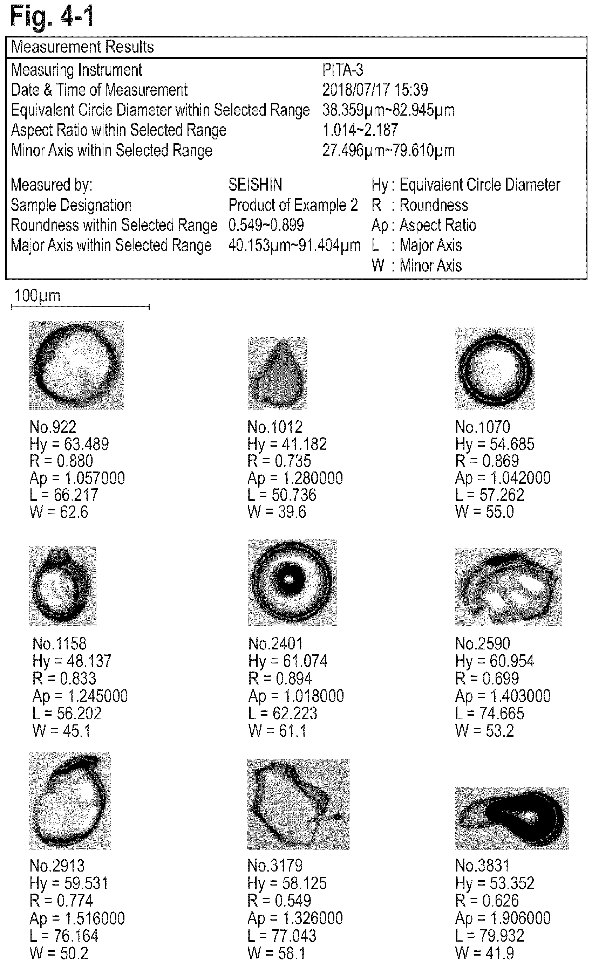

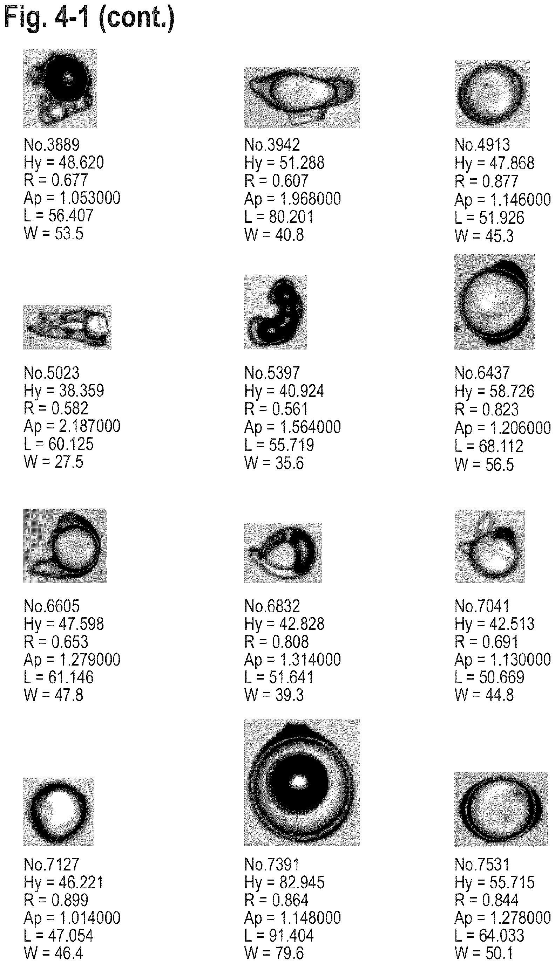

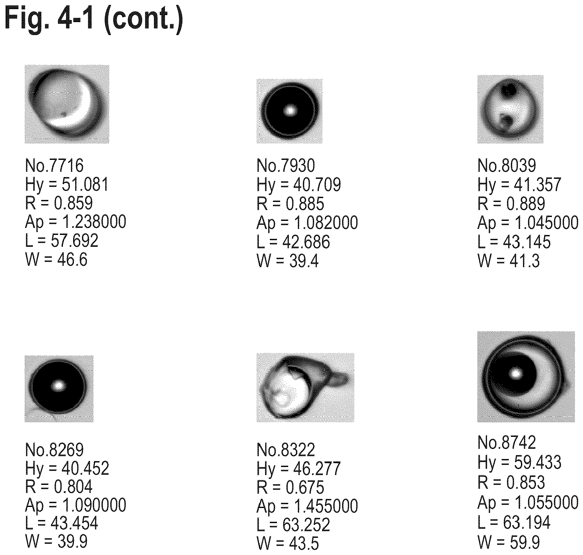

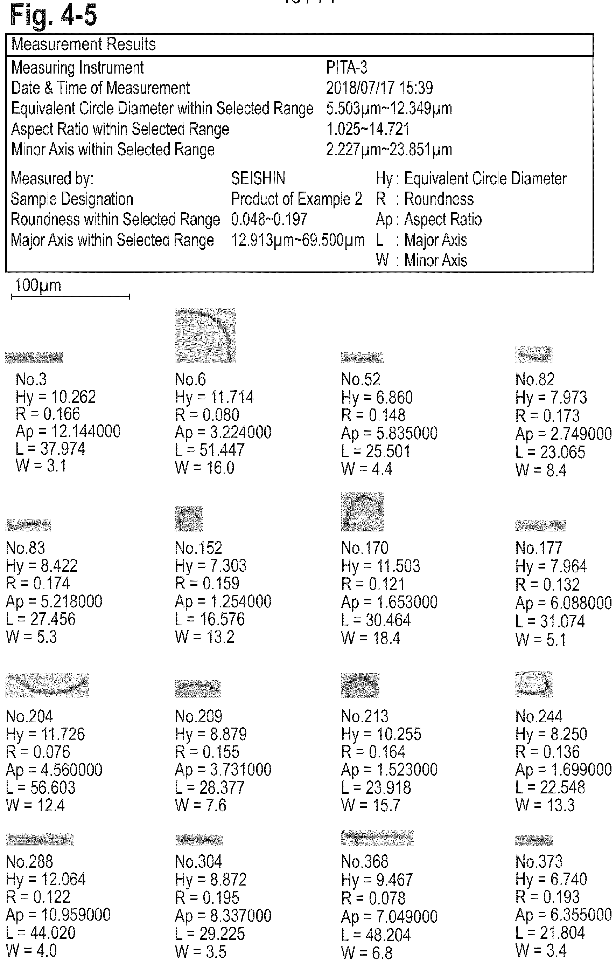

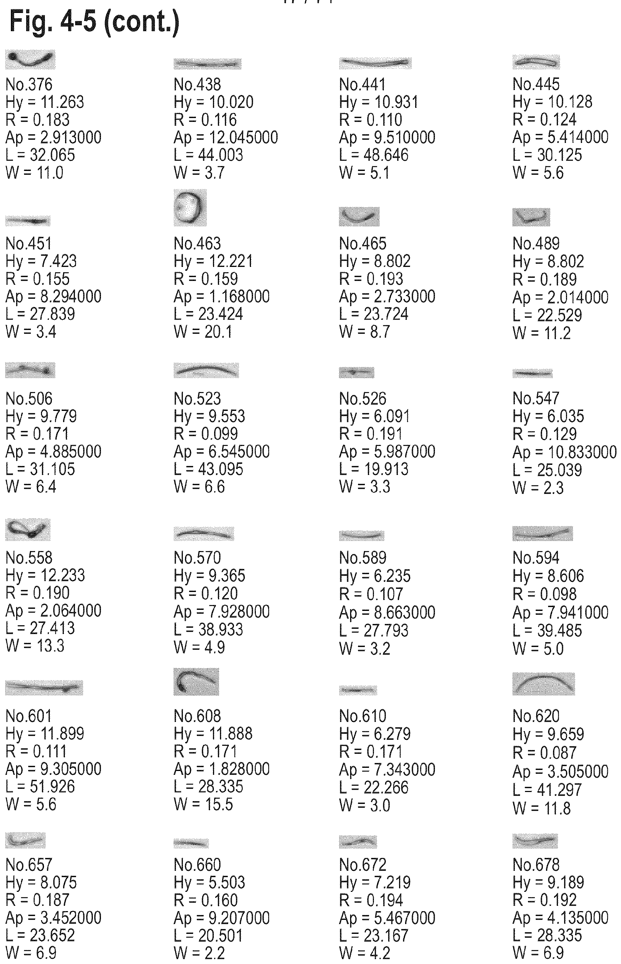

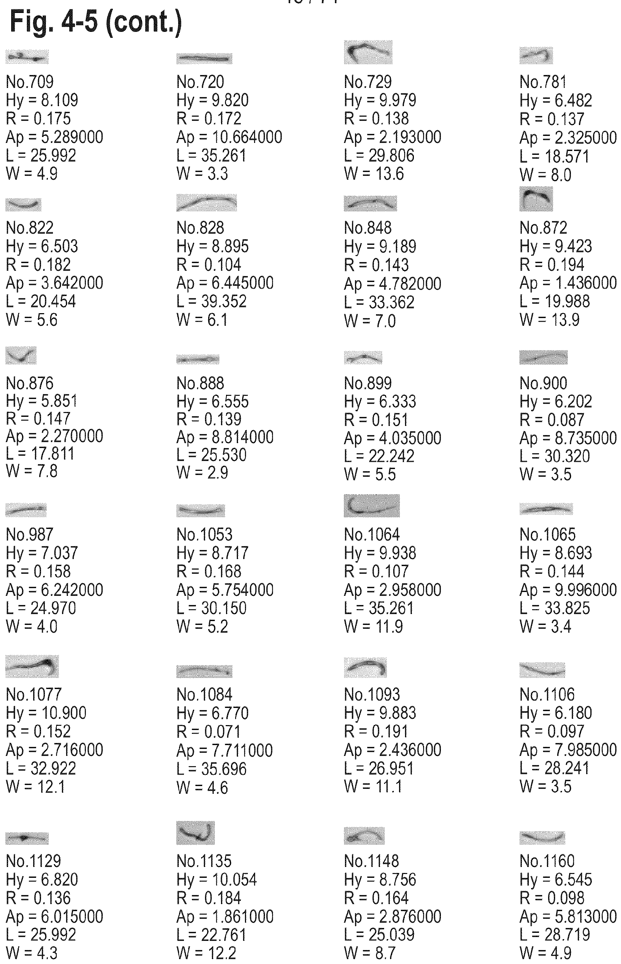

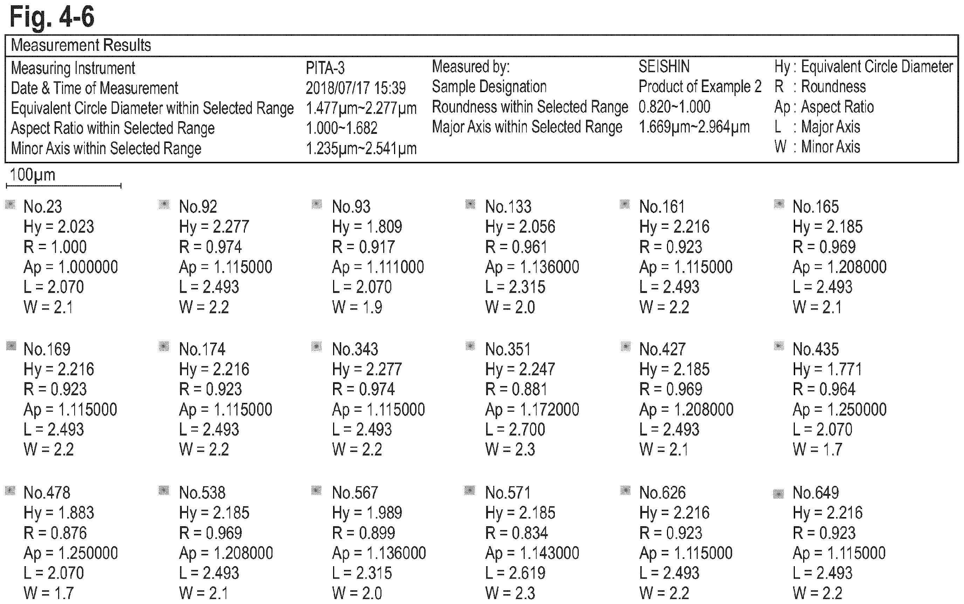

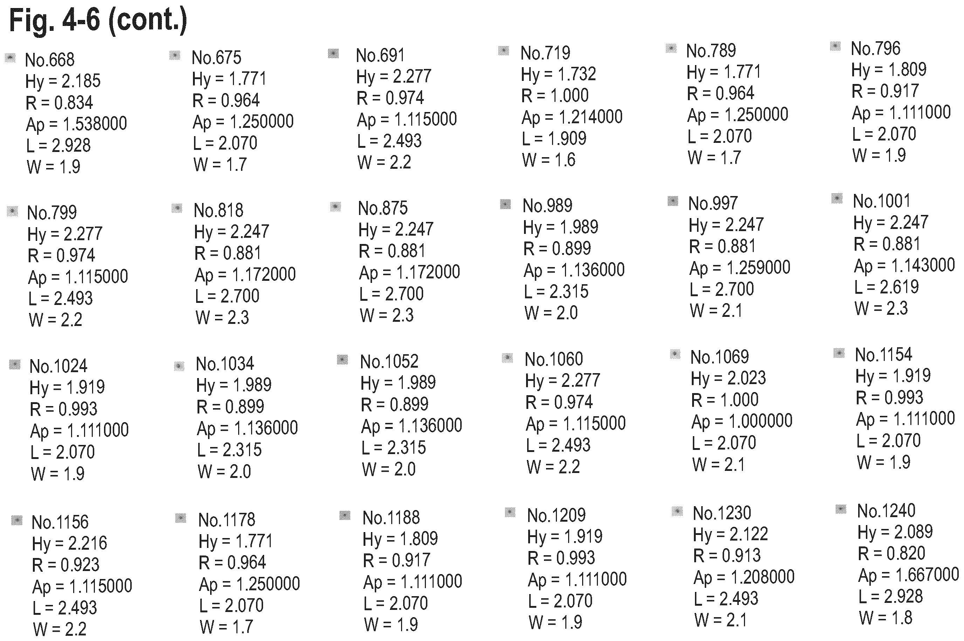

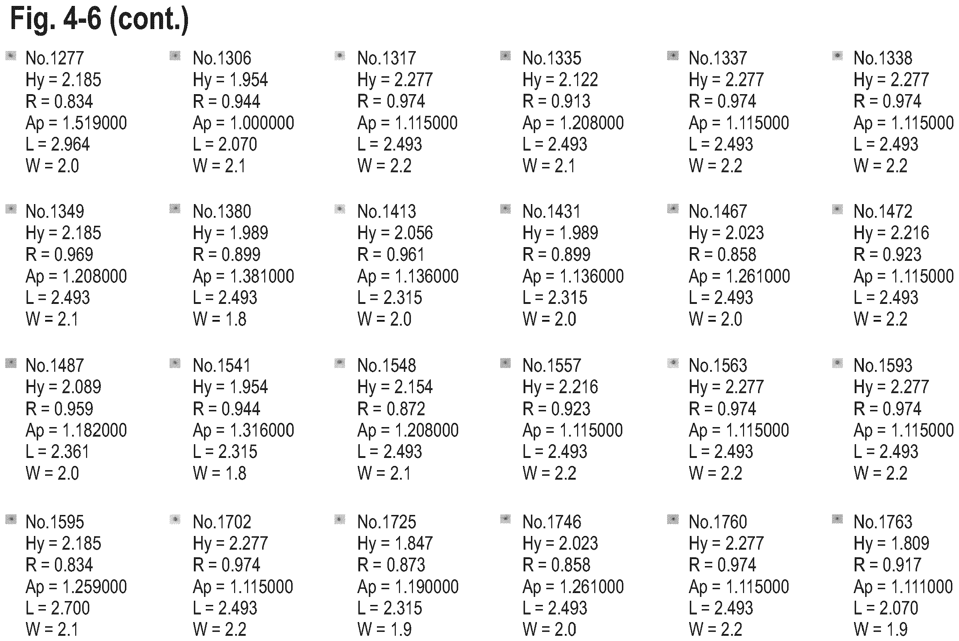

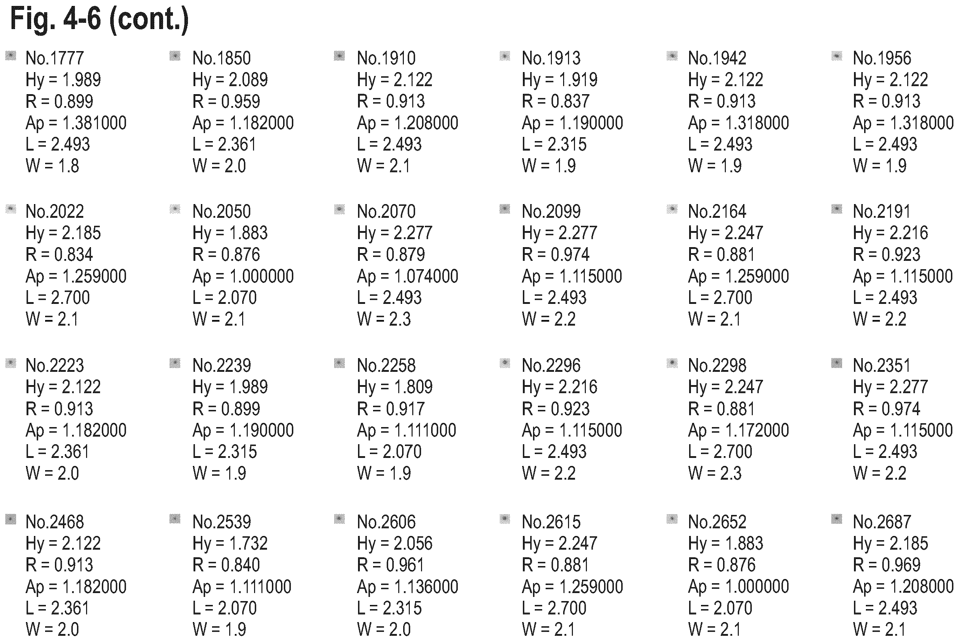

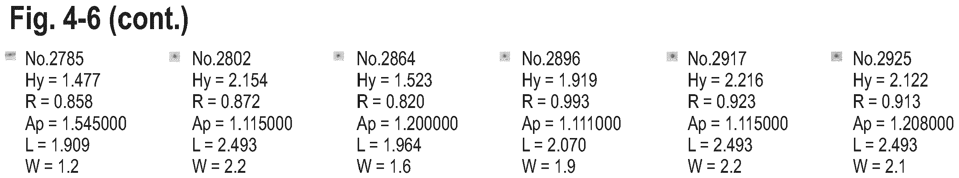

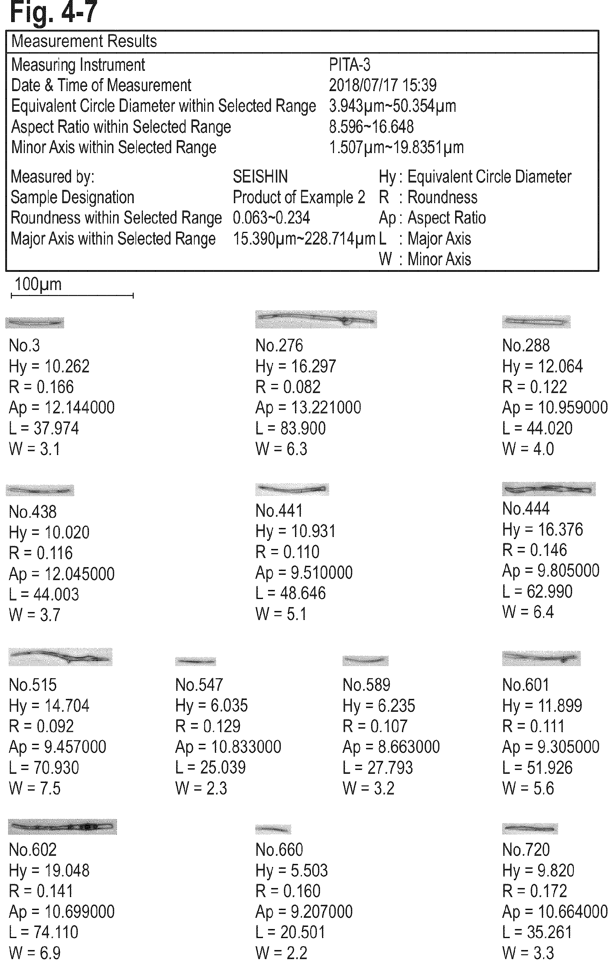

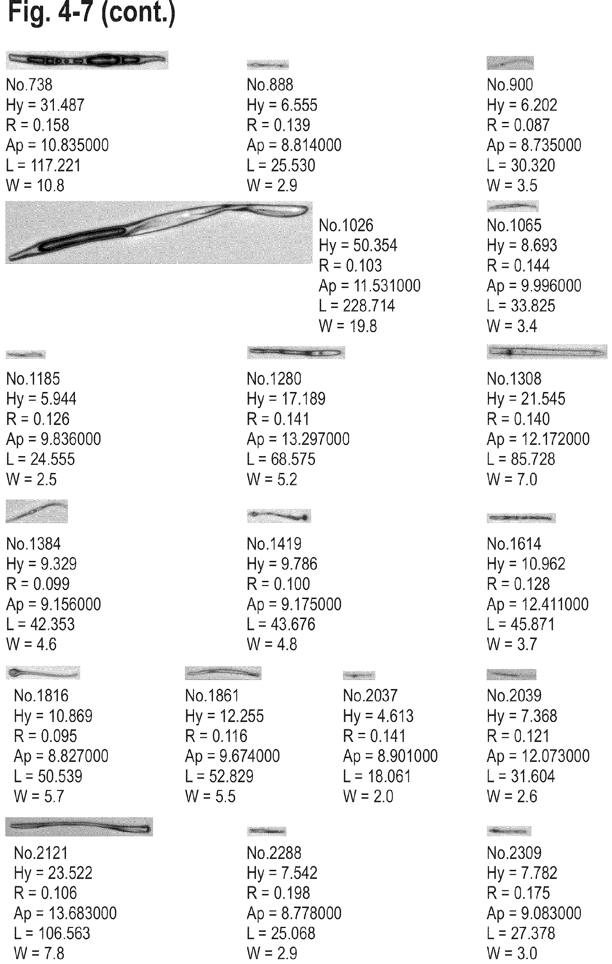

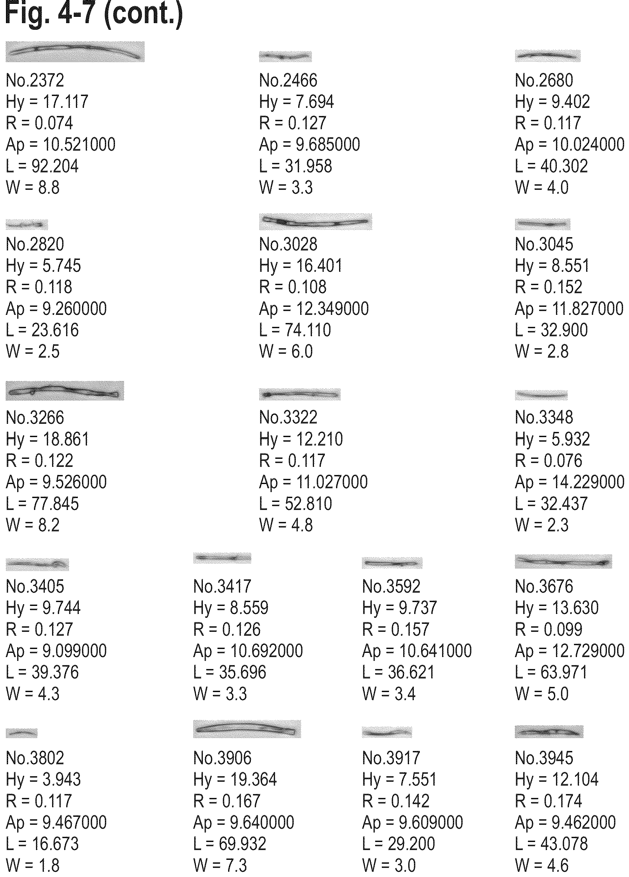

[Fig. 4-1] This figure shows the CCD camera captured images of the dextrin particles prepared in Example 1 (aspect ratio: 1.014 to 2.187). Equivalent circle diameter (Hy): the diameter of a circle having an area equal to the projected area of the relevant particle. Aspect ratio (Ap): maximum length divided by maximum vertical length (L/W). Minor Axis (W): maximum vertical length (the maximum distance between two straight lines parallel to the maximum length between which a particle is held). Major Axis (L): maximum length (the maximum length between any two points on the profile line of the projected image of the relevant particle). Roundness (R): numerical value obtained from the circumference of a circle having an area equal to the projected area of the relevant particle, A, as divided by its circumferential length, P (the length on its circumference). Here, a squared value 4πA/P² is used.
[Fig. 4-2] This figure shows the CCD camera captured images of the dextrin particles prepared in Example 1 (aspect ratio: 1.276 to 11.531).
[Fig. 4-3] This figure shows the CCD camera captured images of the dextrin particles prepared in Example 1 (aspect ratio: 1.000 to 2.432).
[Fig. 4-4] This figure shows the CCD camera captured images of the dextrin particles prepared in Example 1 (aspect ratio: 1.000 to 1.878).

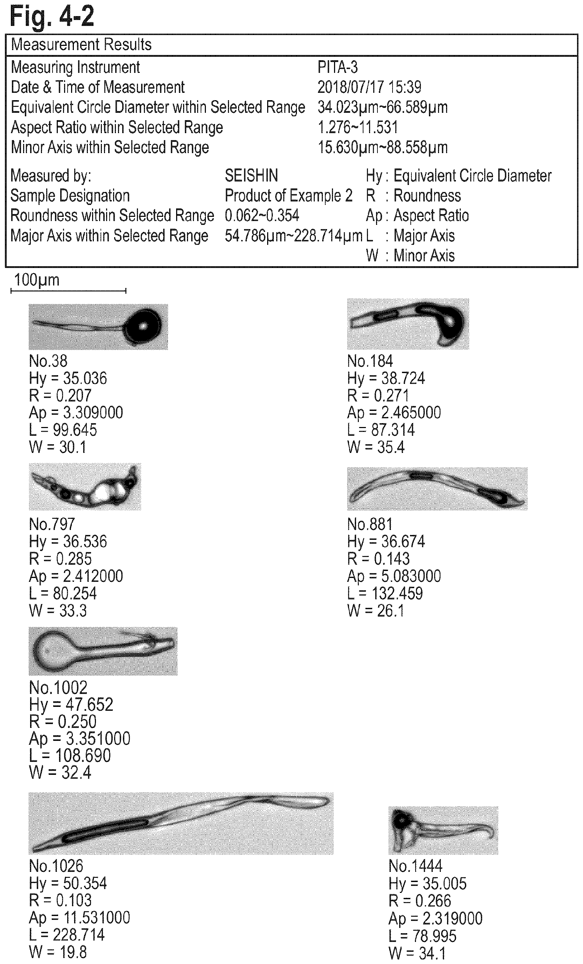

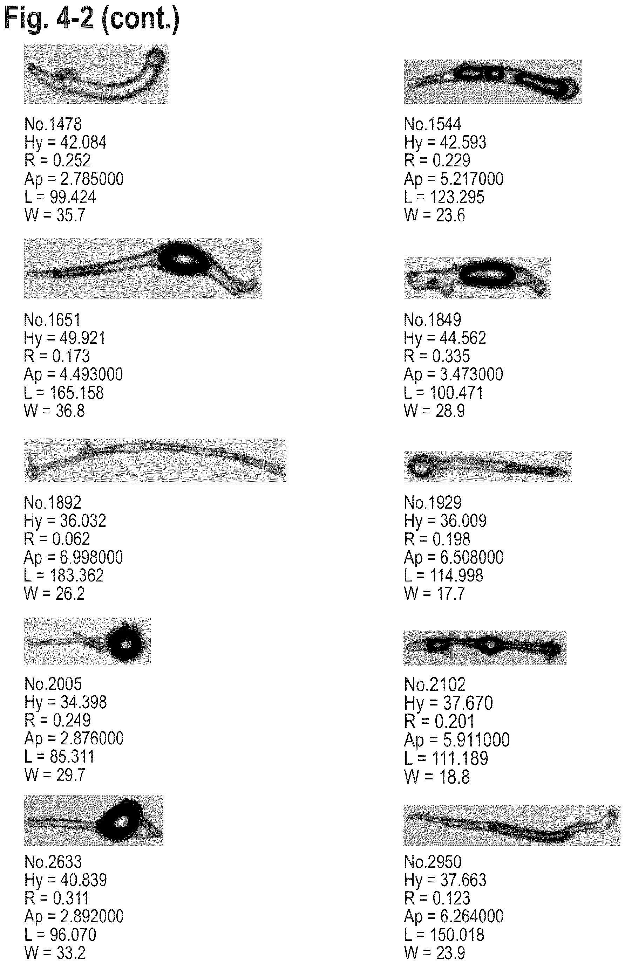

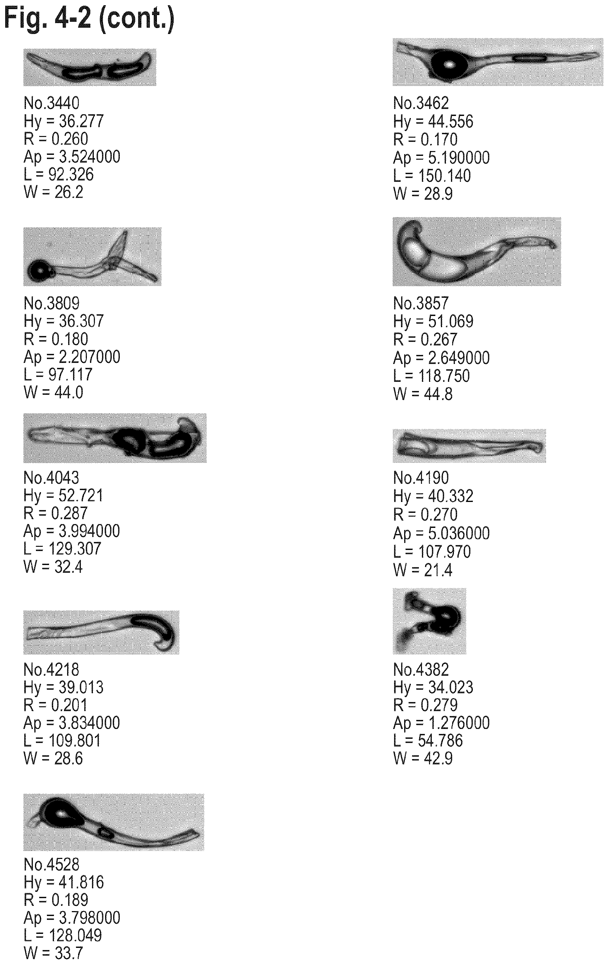

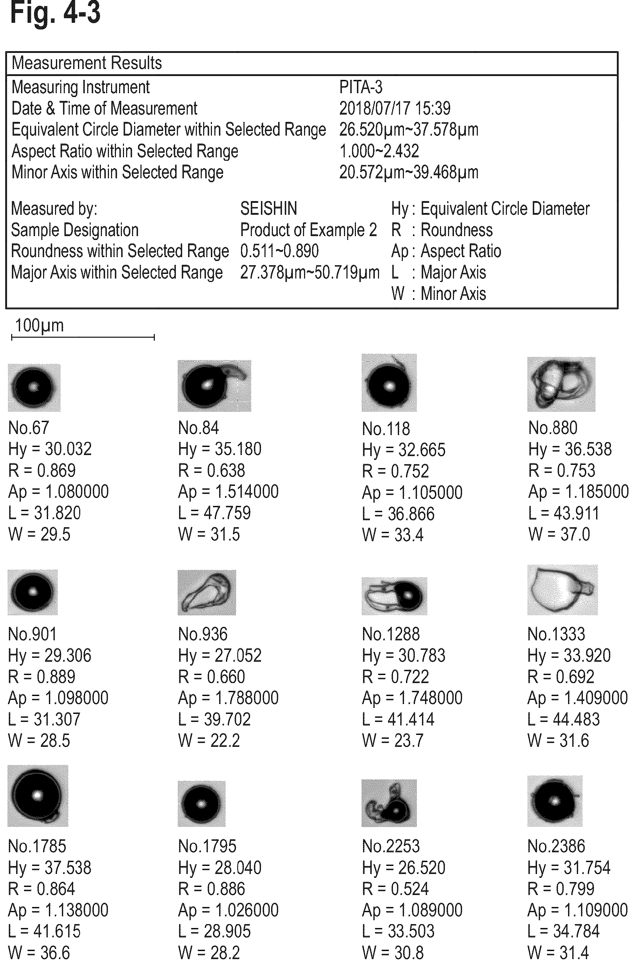

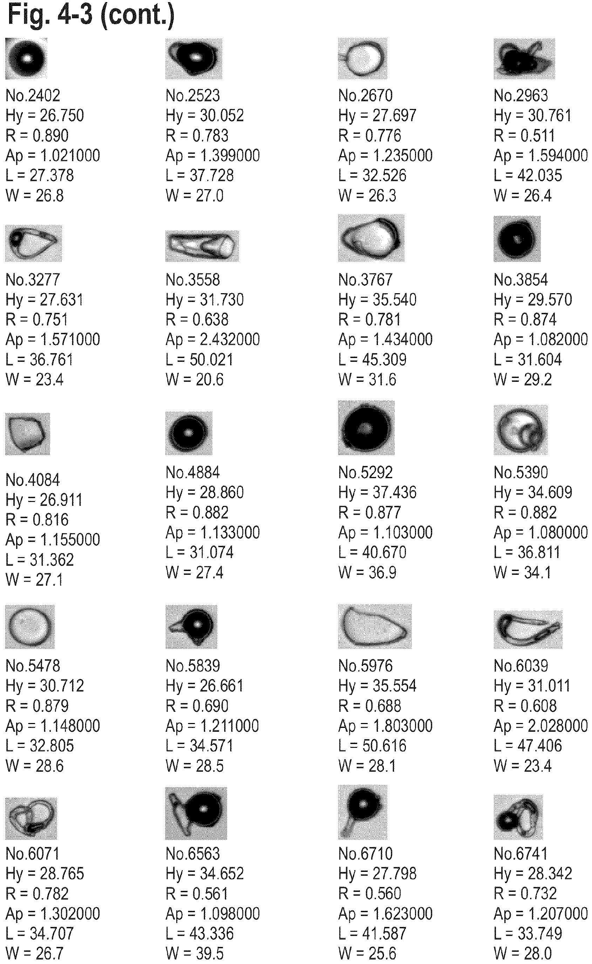

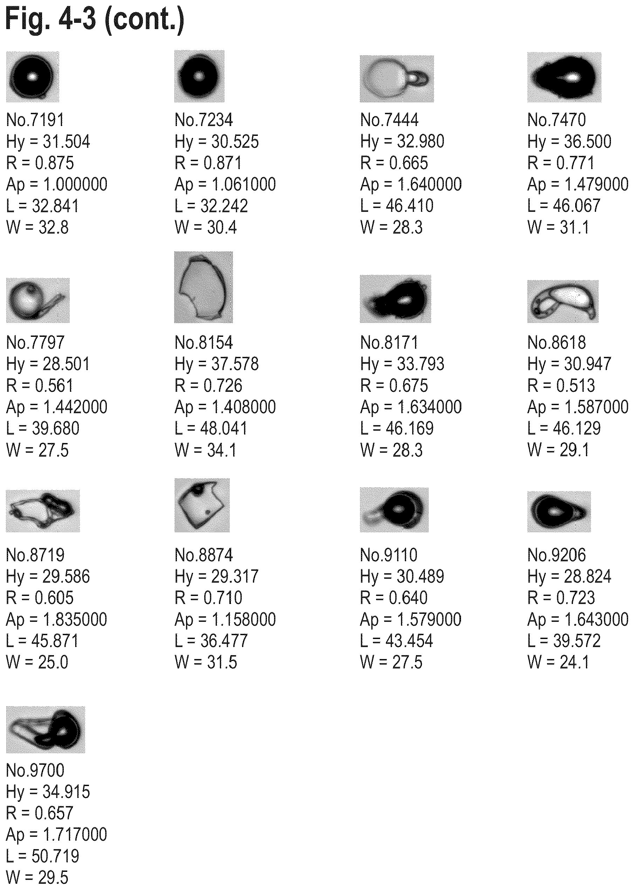

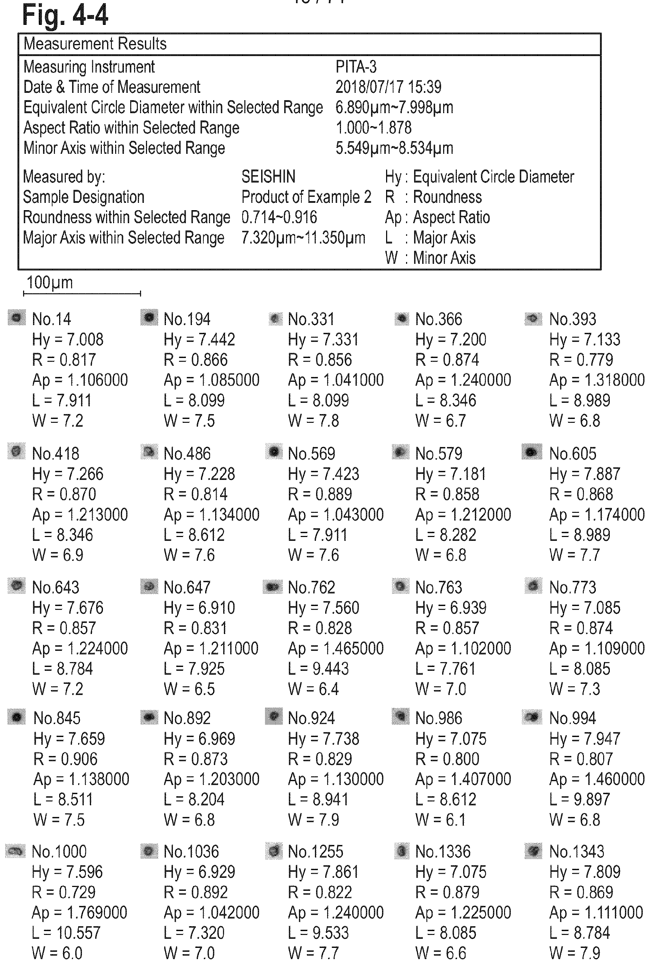

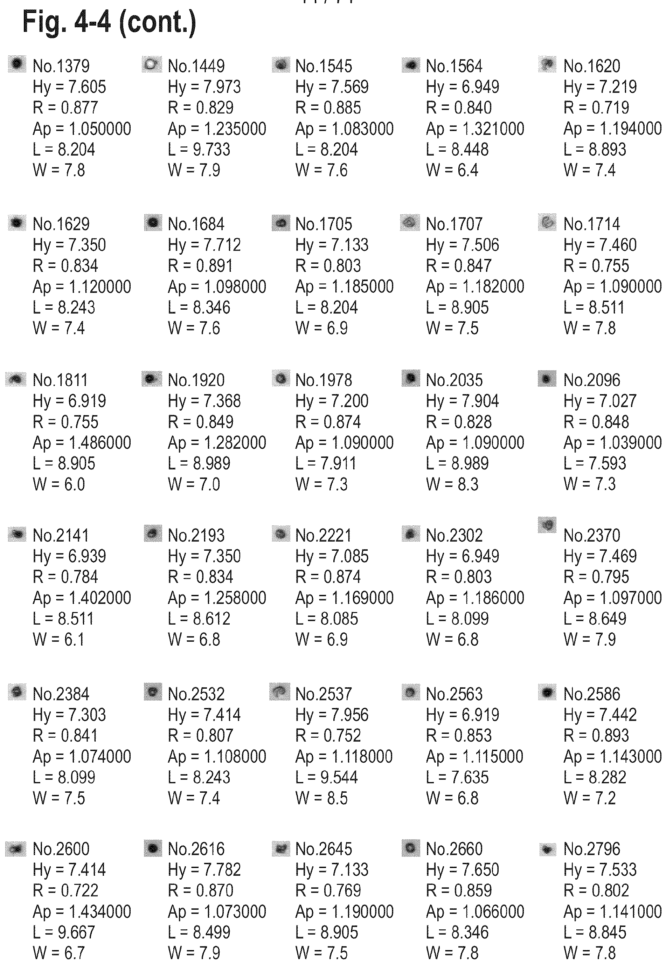

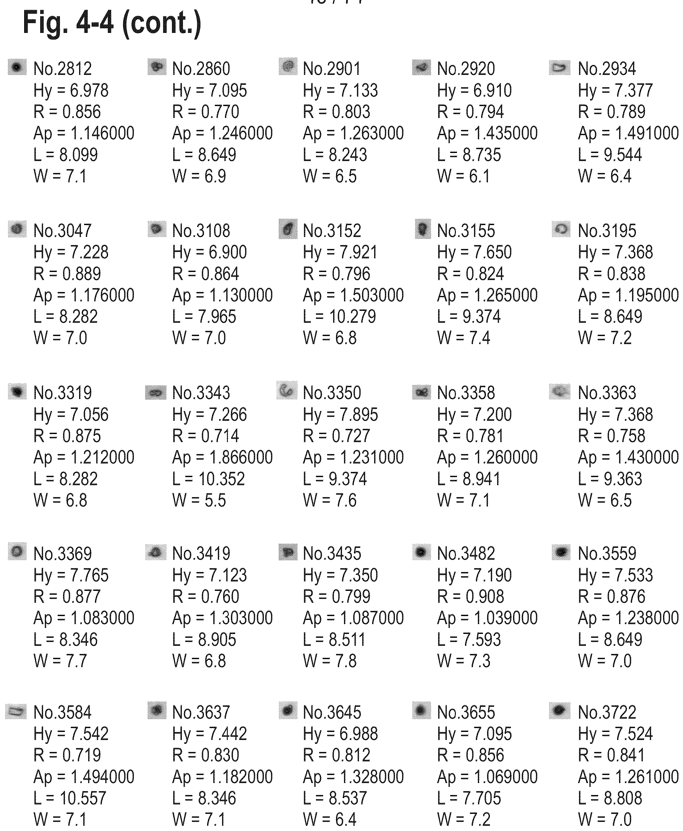

[Fig. 4-5] This figure shows the CCD camera captured images of the dextrin particles prepared in Example 1 (aspect ratio: 1.025 to 14.721).
[Fig. 4-6] This figure shows the CCD camera captured images of the dextrin particles prepared in Example 1 (aspect ratio: 1.000 to 1.682).
[Fig. 4-7] This figure shows the CCD camera captured images of the dextrin particles prepared in Example 1 (aspect ratio: 8.596 to 16.648).

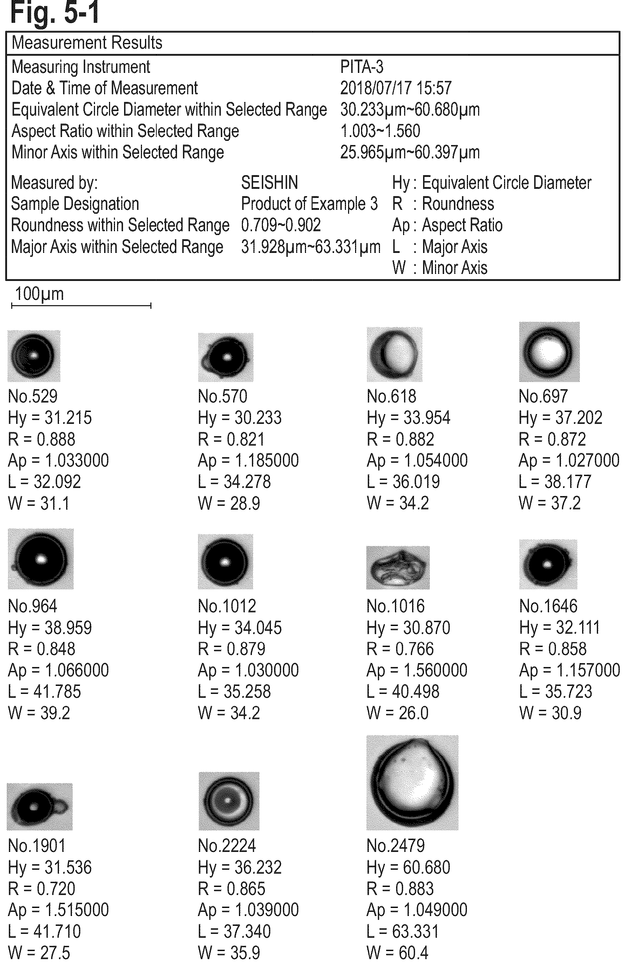

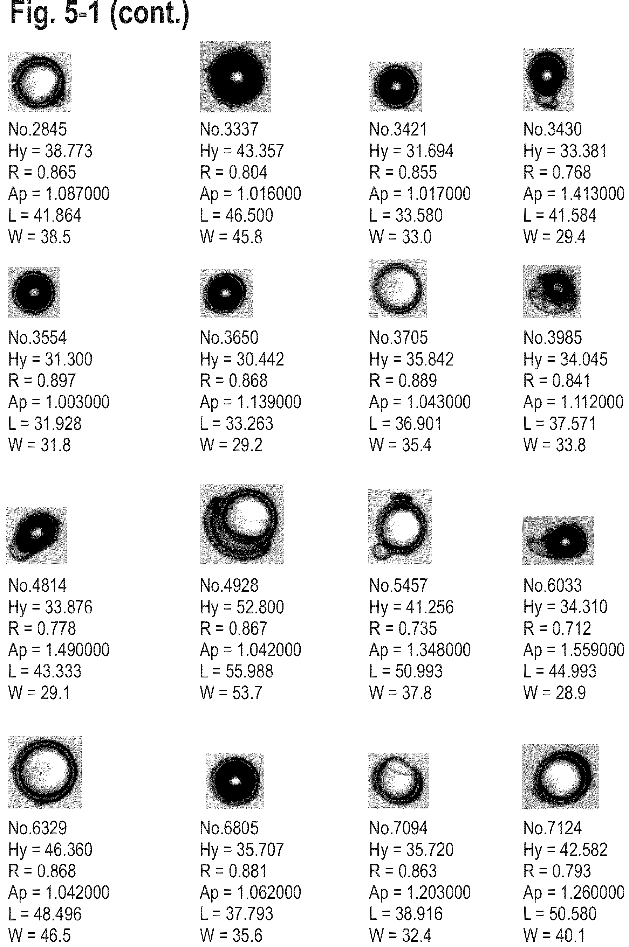

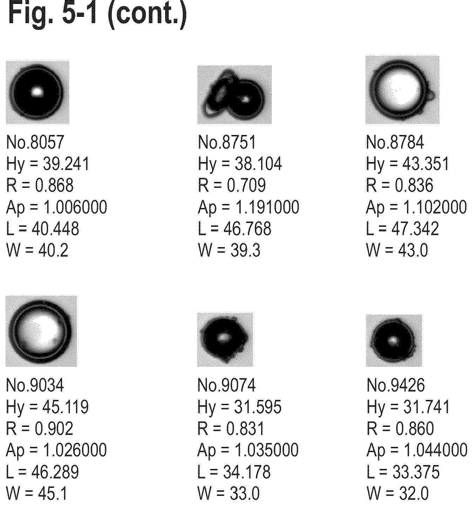

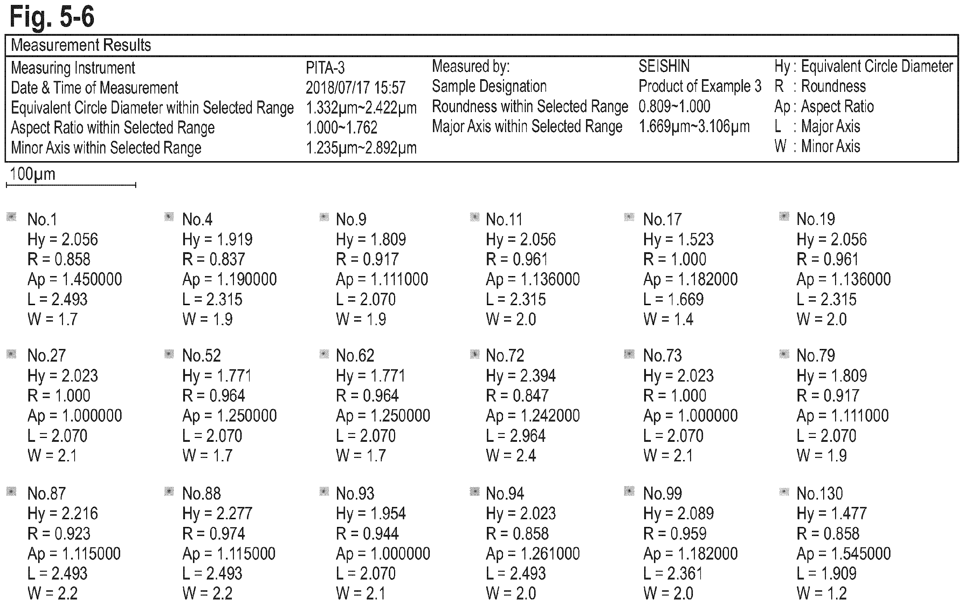

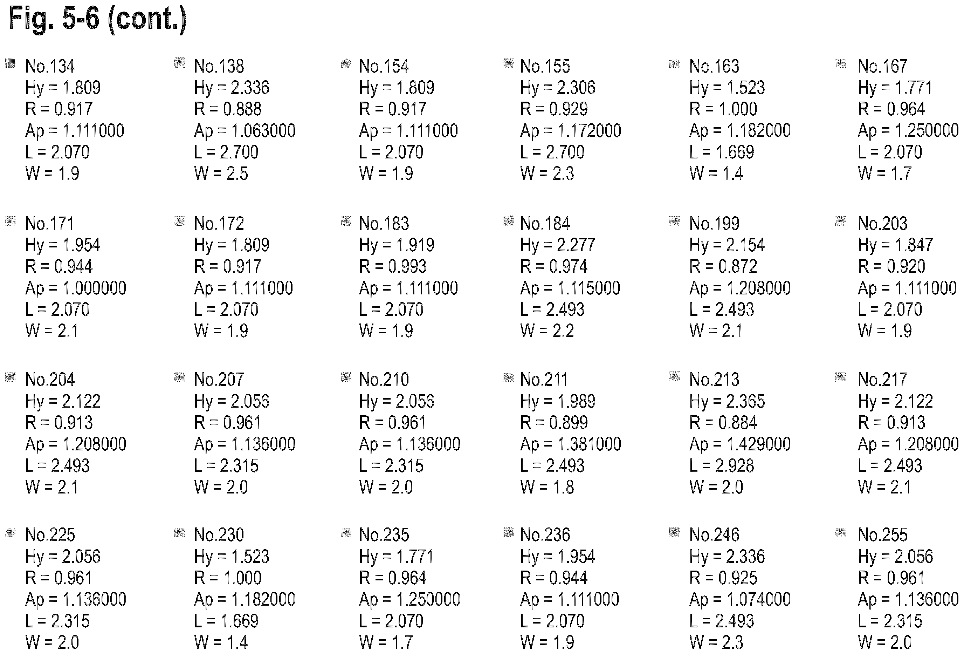

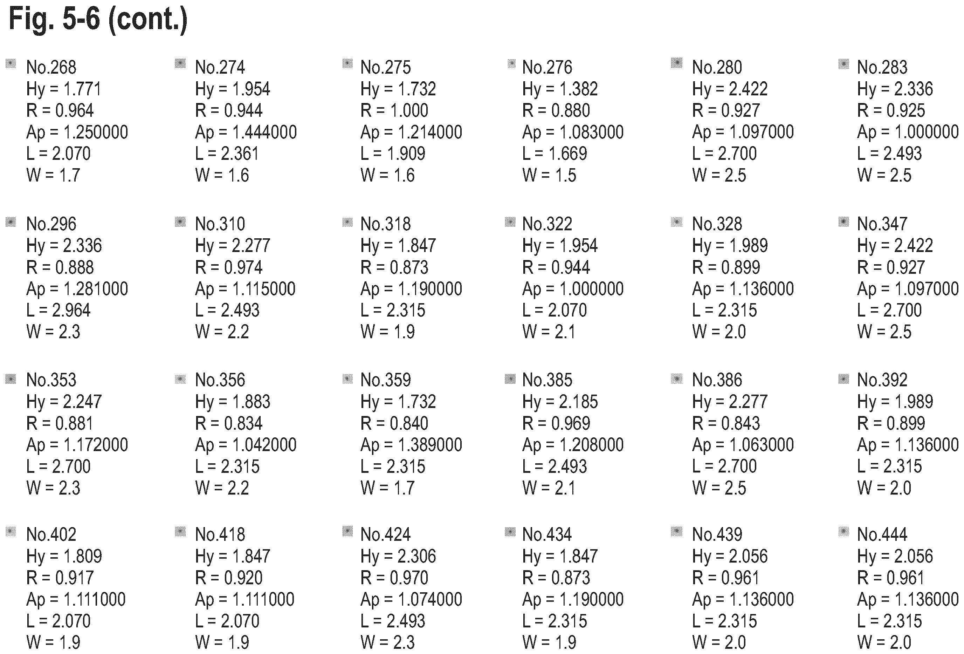

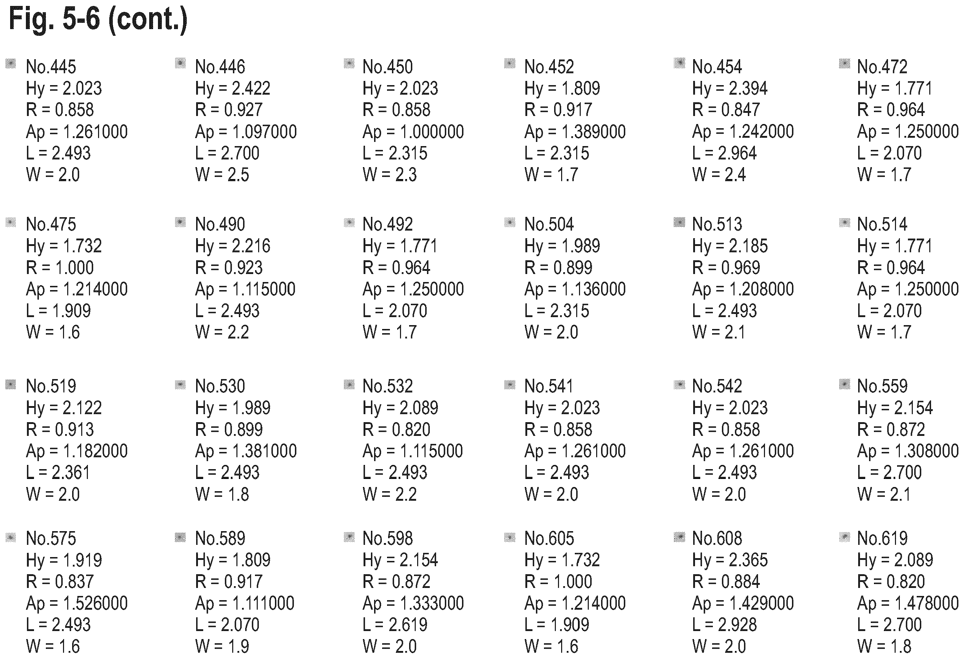

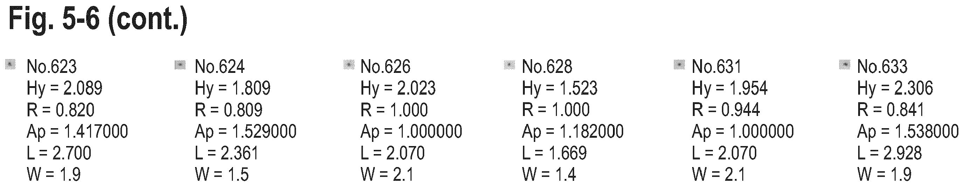

[Fig. 5-1] This figure shows the CCD camera captured images of the dextrin particles prepared in Example 2 (aspect ratio: 1.003 to 1.560).

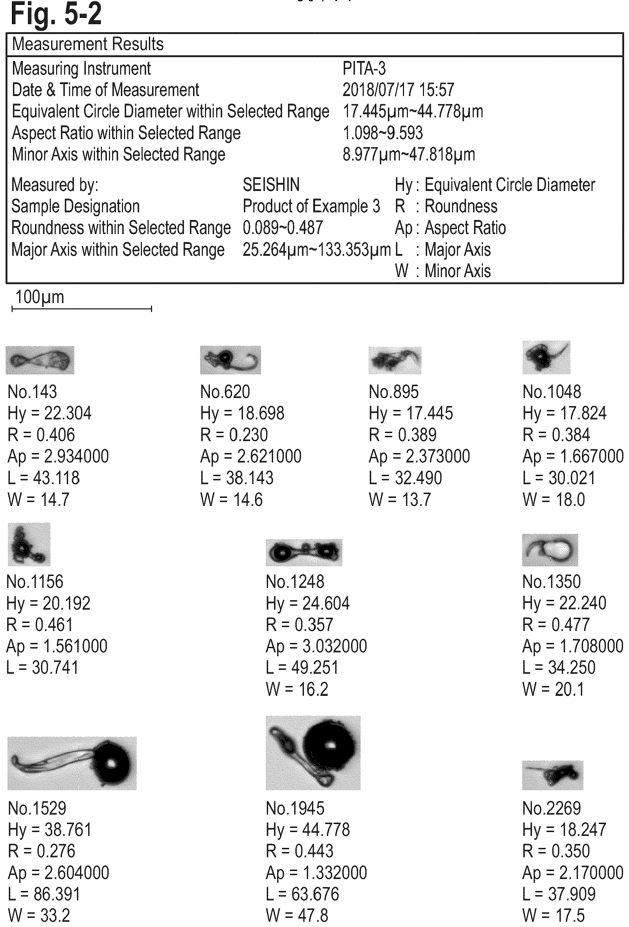

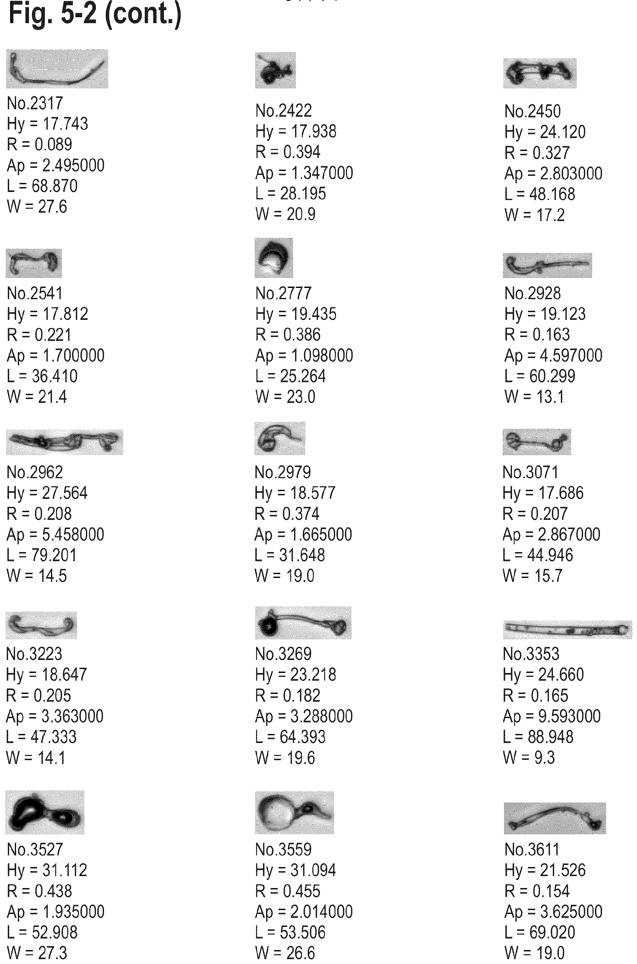

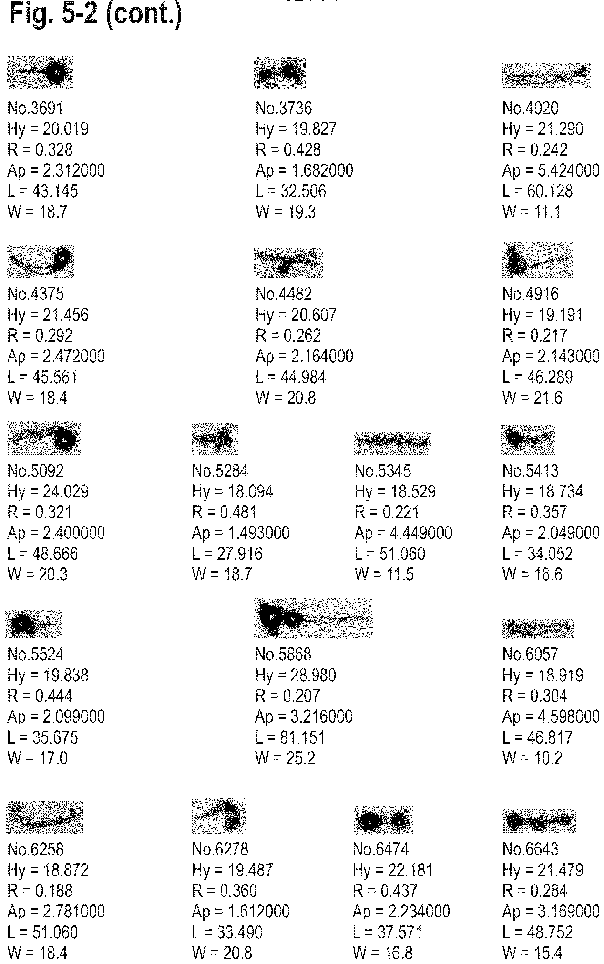

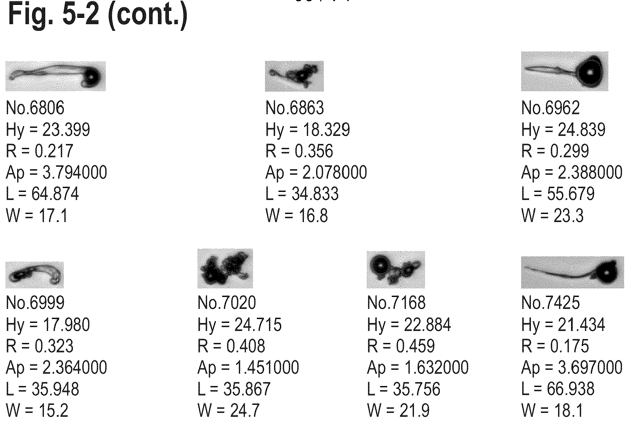

[Fig. 5-2] This figure shows the CCD camera captured images of the dextrin particles prepared in Example 2 (aspect ratio: 1.098 to 9.593).

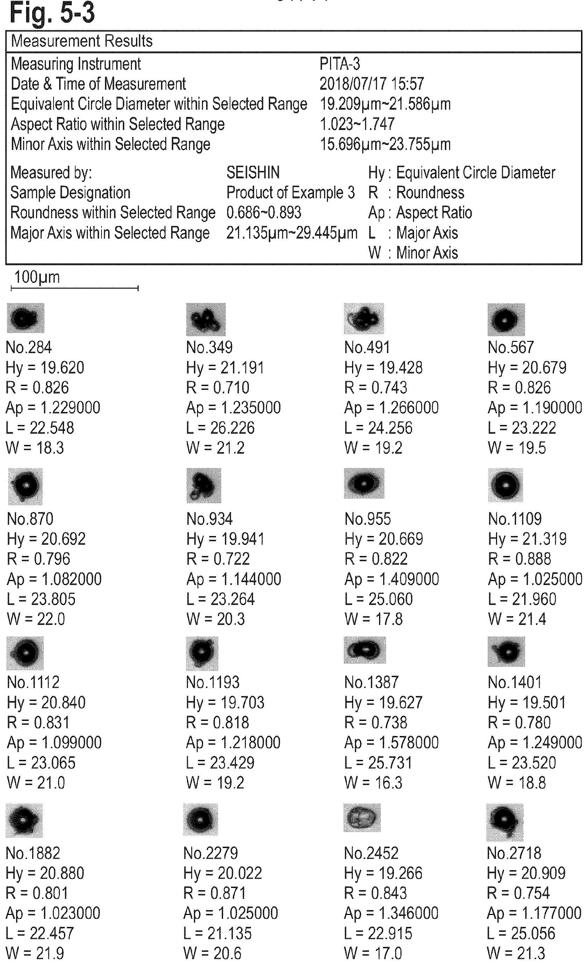

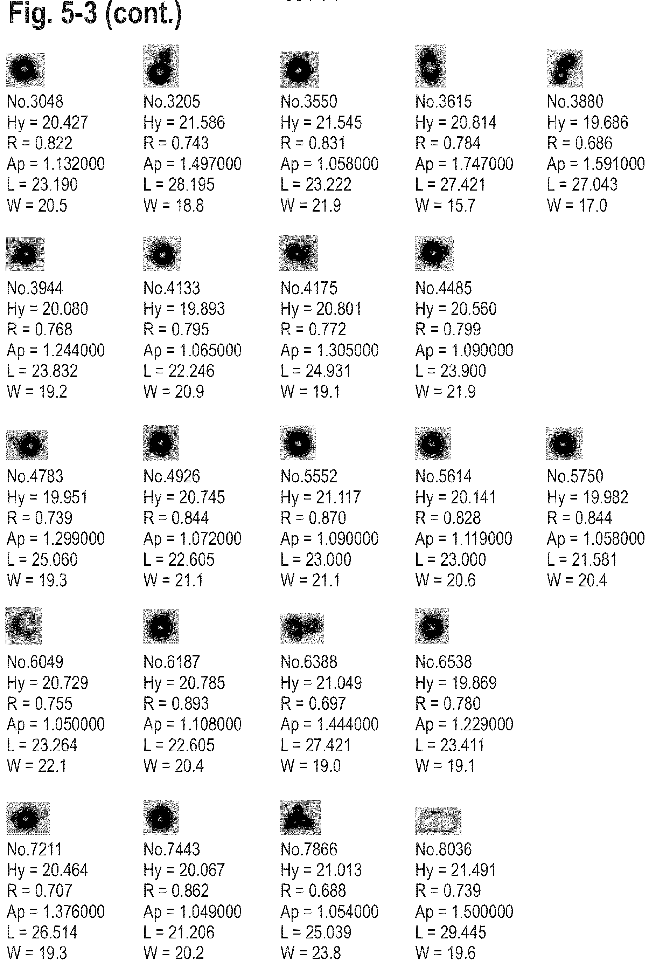

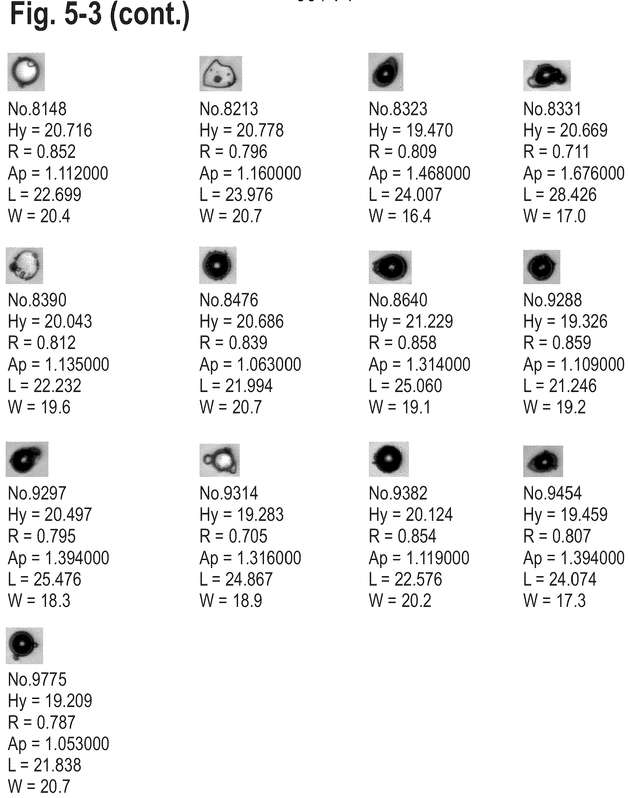

[Fig. 5-3] This figure shows the CCD camera captured images of the dextrin particles prepared in Example 2 (aspect ratio: 1.023 to 1.747).

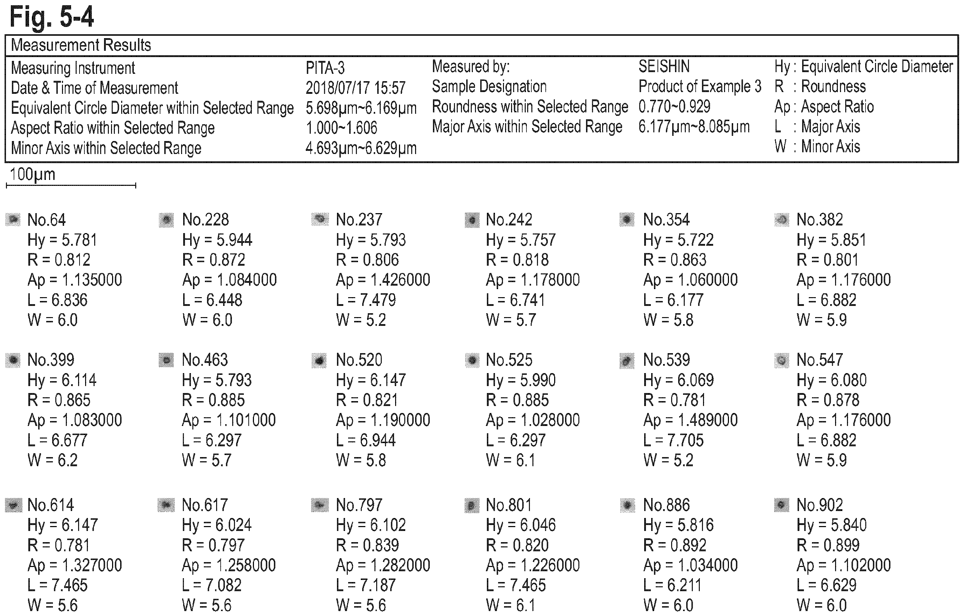

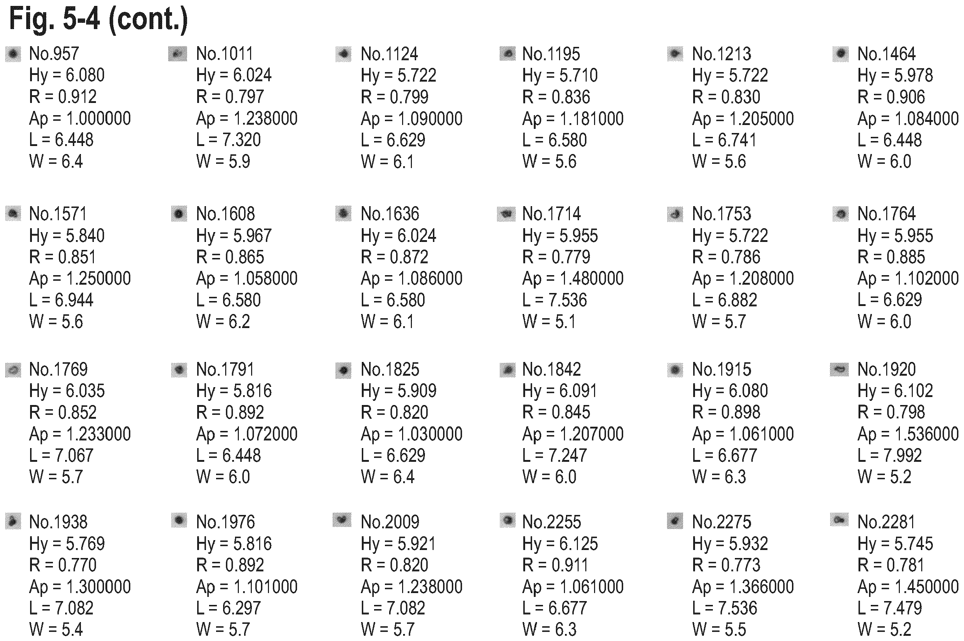

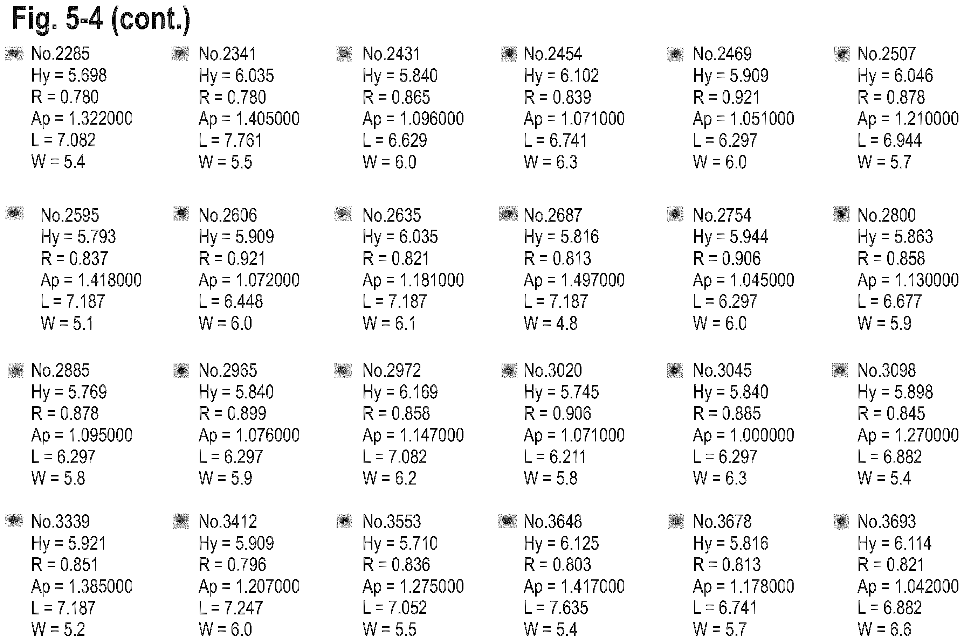

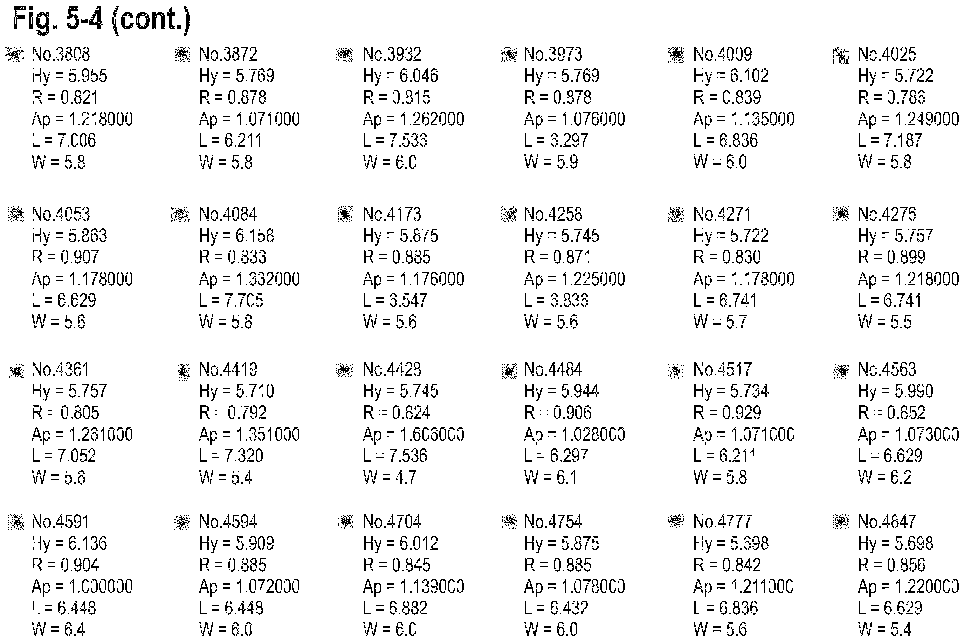

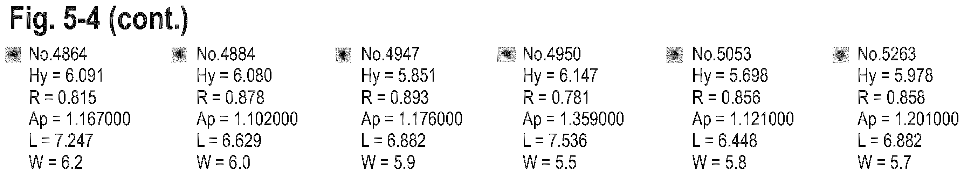

[Fig. 5-4] This figure shows the CCD camera captured images of the dextrin particles prepared in Example 2 (aspect ratio: 1.000 to 1.606).

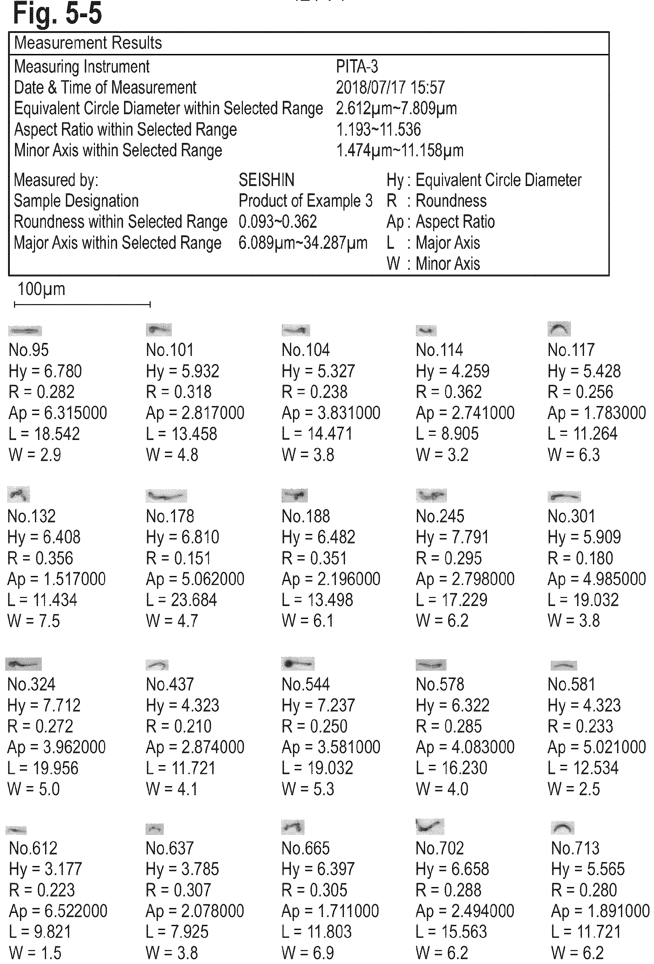

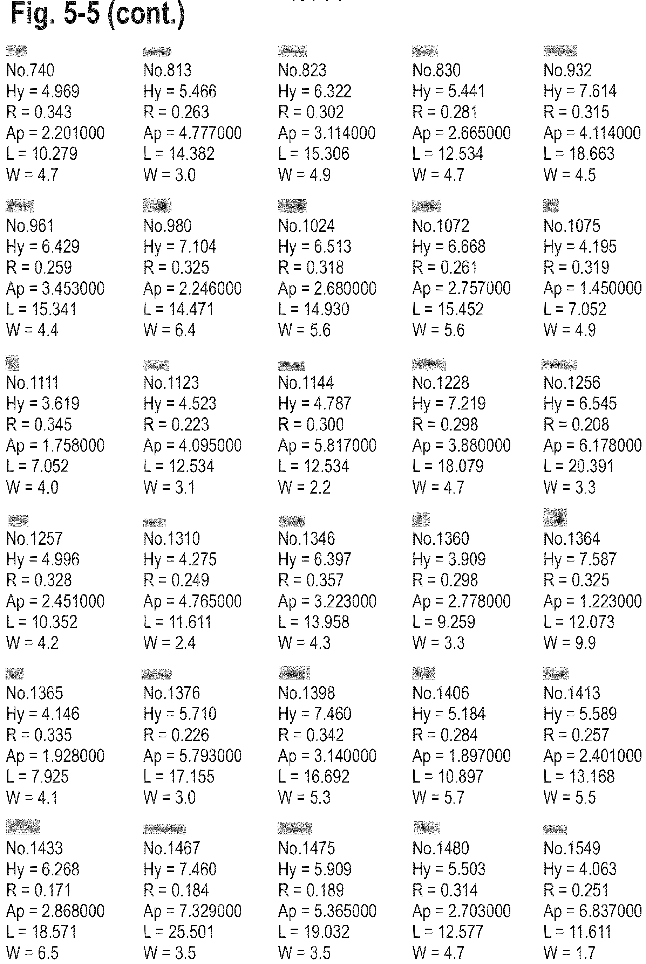

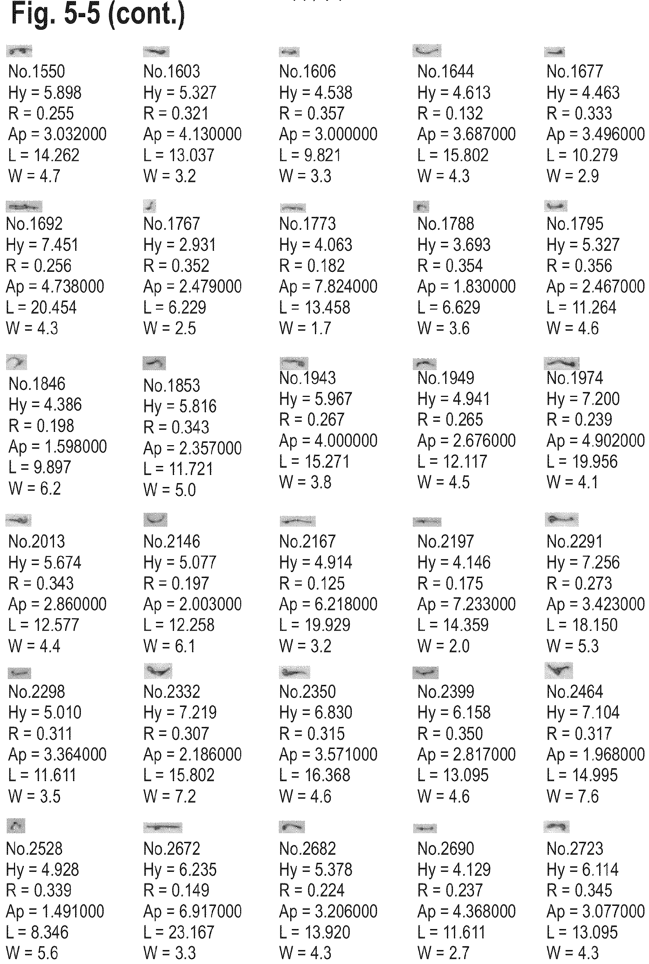

[Fig. 5-5] This figure shows the CCD camera captured images of the dextrin particles prepared in Example 2 (aspect ratio: 1.193 to 11.536).
[Fig. 5-6] This figure shows the CCD camera captured images of the dextrin particles prepared in Example 2 (aspect ratio: 1.000 to 1.762).

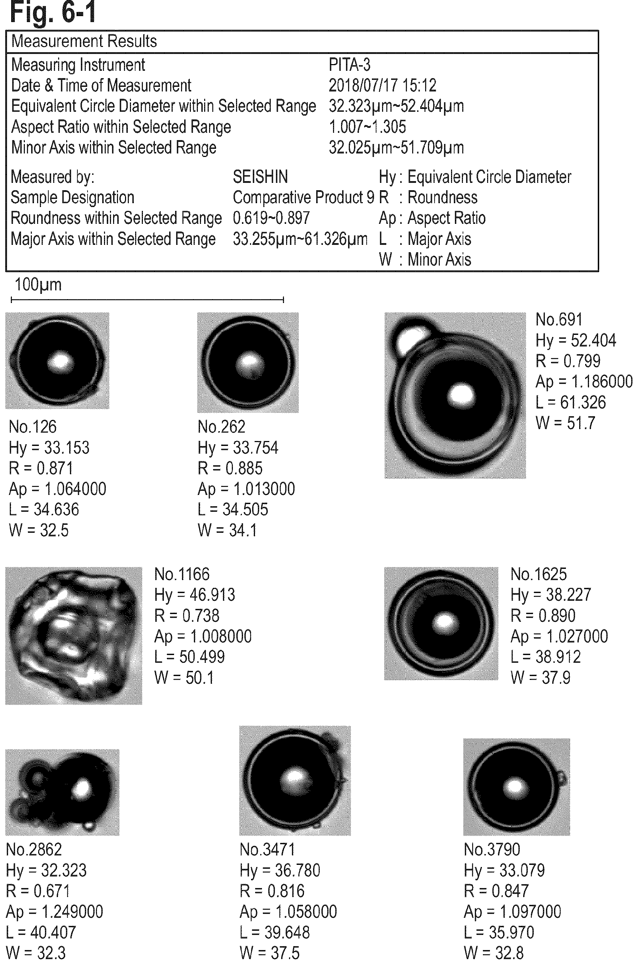

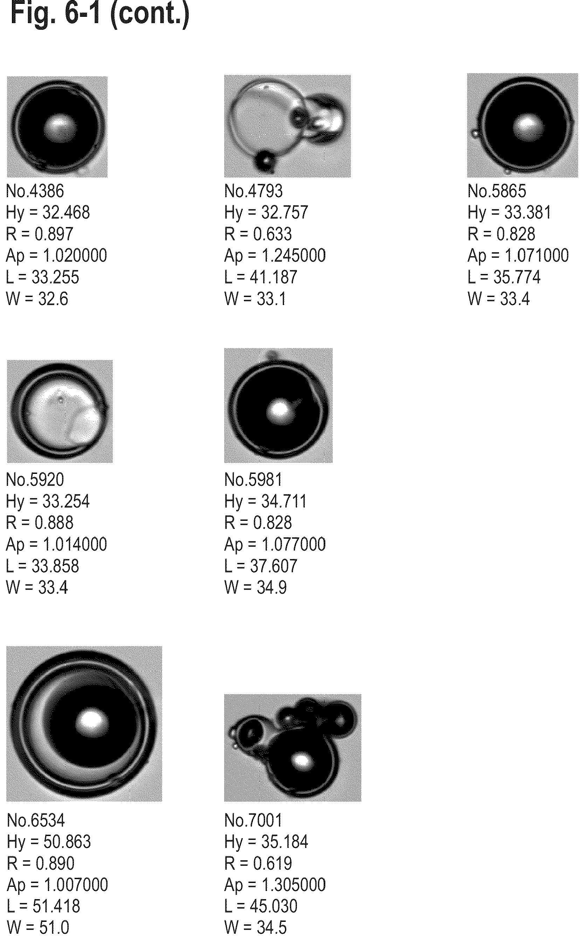

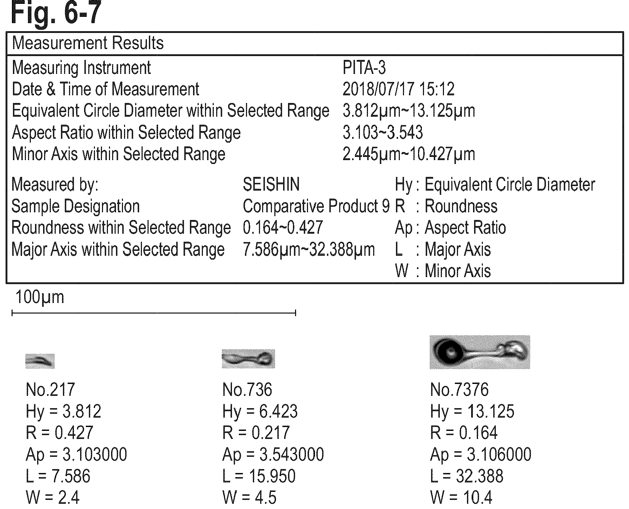

[Fig. 6-1] This figure shows the CCD camera captured images of the dextrin particles prepared in Comparative Example 1 (aspect ratio: 1.007 to 1.305).

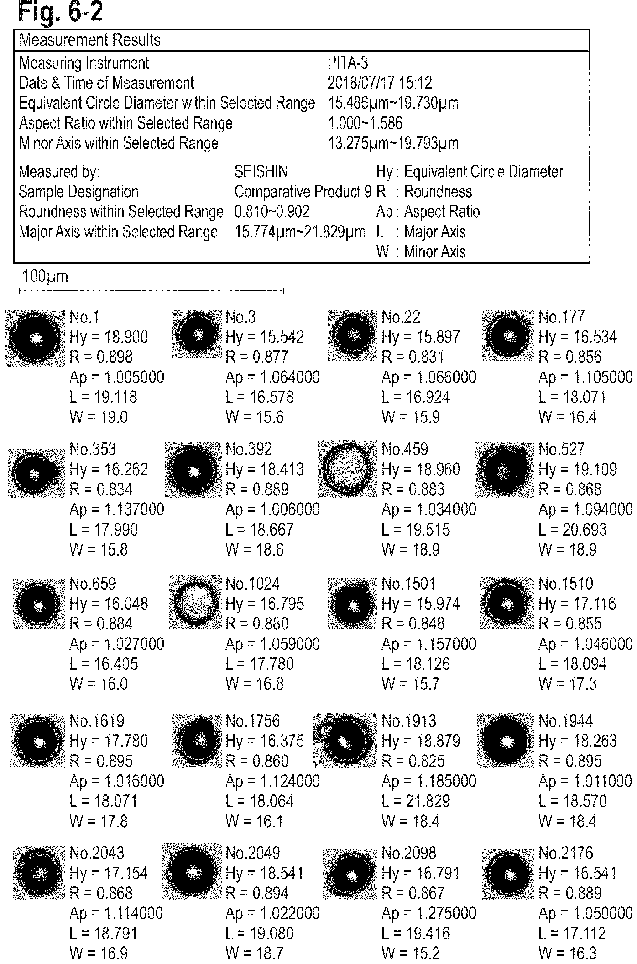

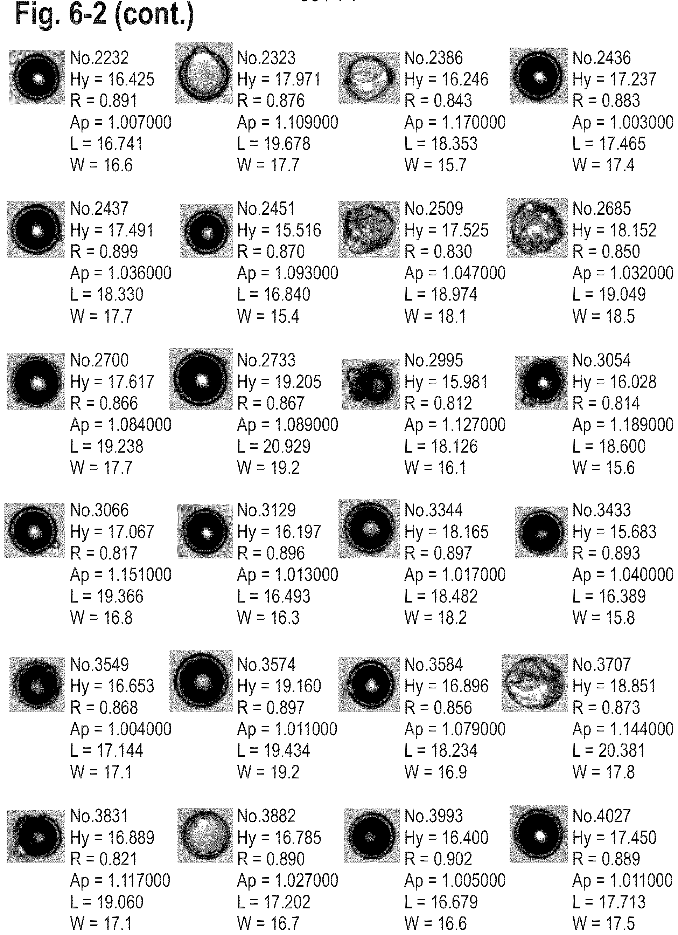

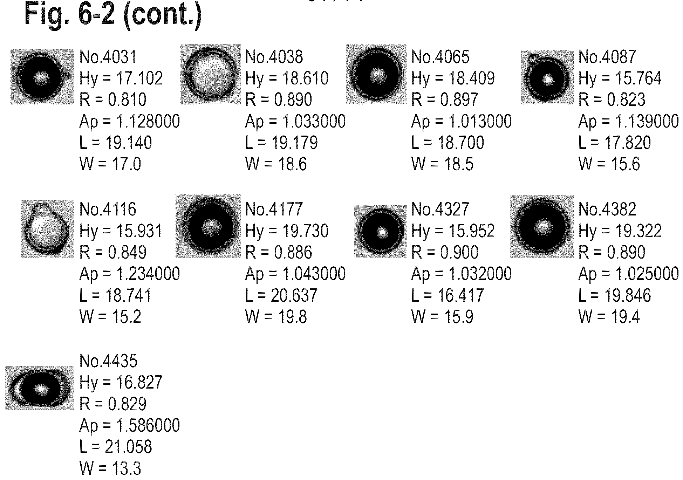

[Fig. 6-2] This figure shows the CCD camera captured images of the dextrin particles prepared in Comparative Example 1 (aspect ratio: 1.000 to 1.586).

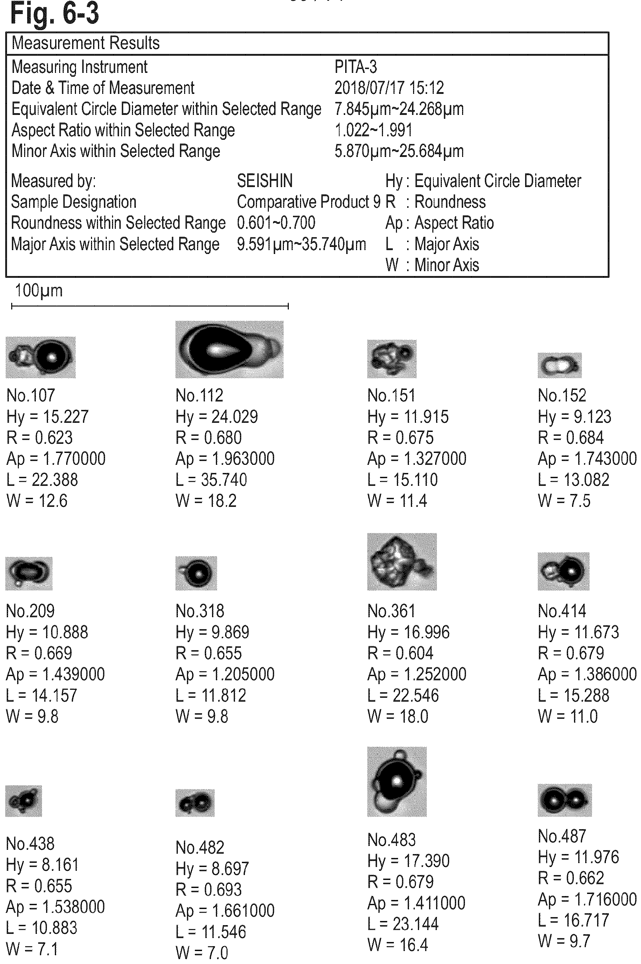

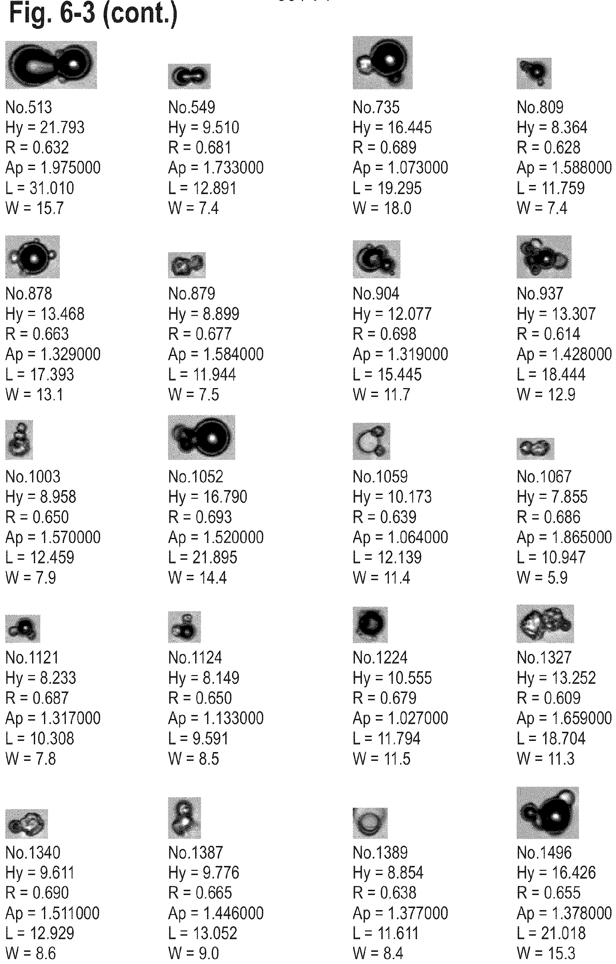

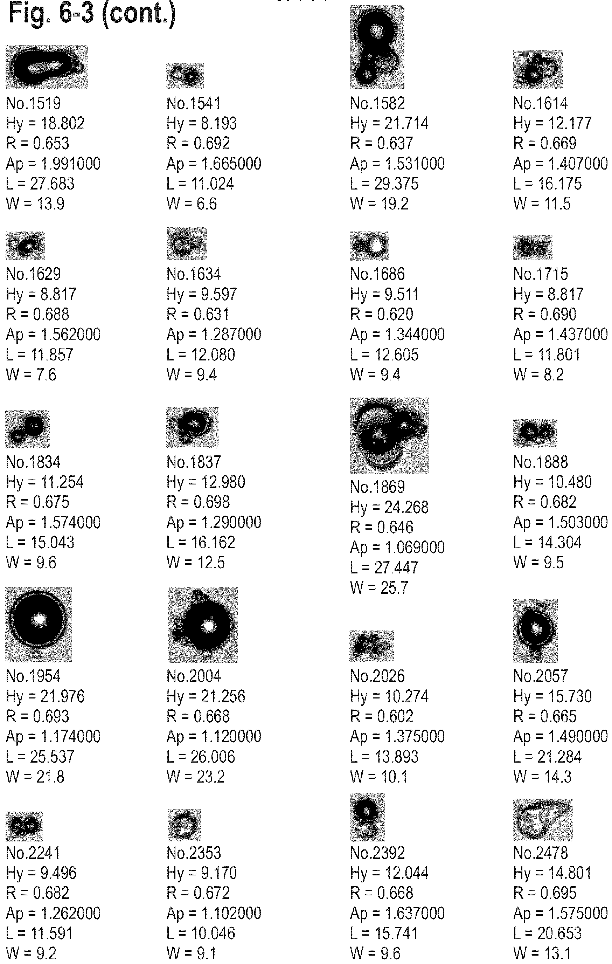

[Fig. 6-3] This figure shows the CCD camera captured images of the dextrin particles prepared in Comparative Example 1 (aspect ratio: 1.022 to 1.991).

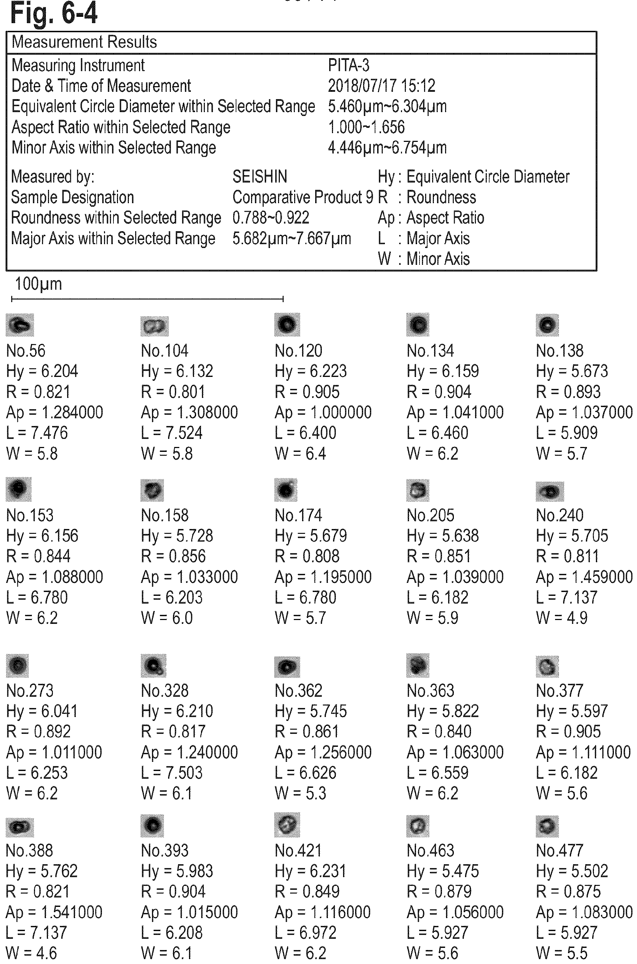

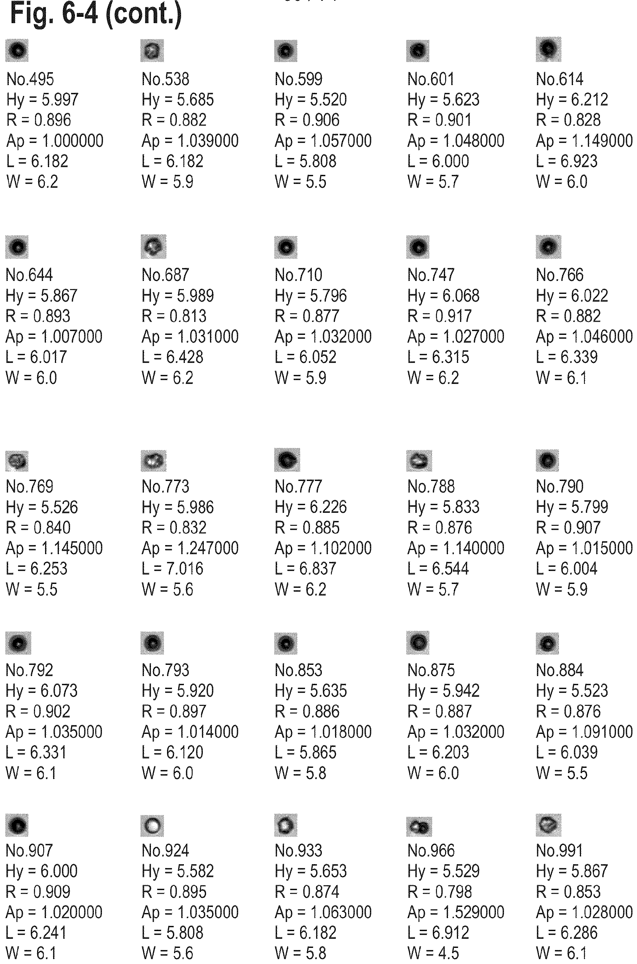

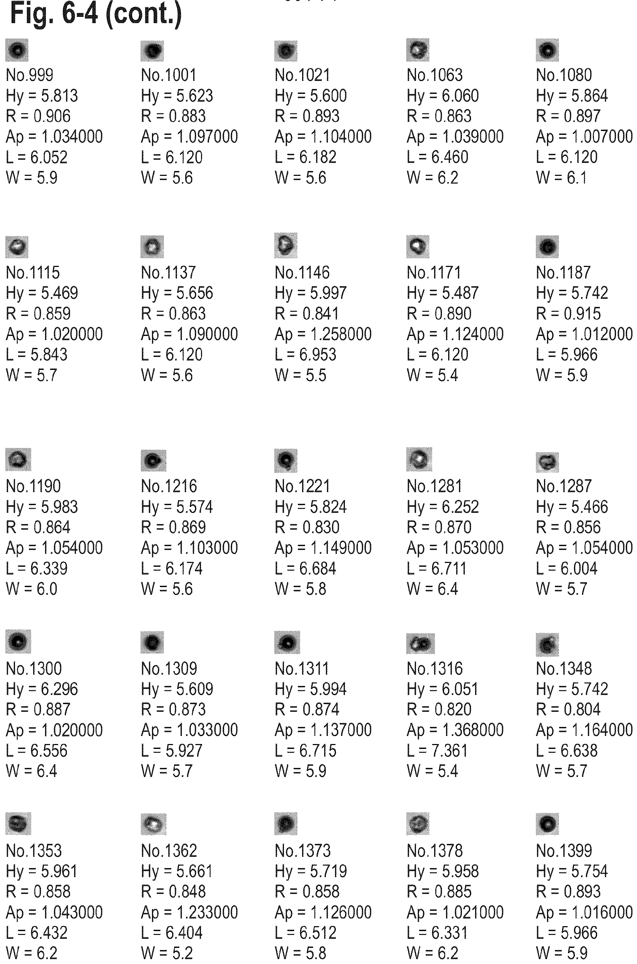

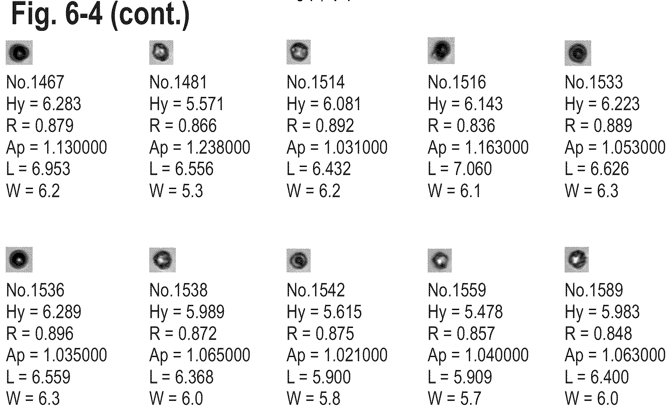

[Fig. 6-4] This figure shows the CCD camera captured images of the dextrin particles prepared in Comparative Example 1 (aspect ratio: 1.000 to 1.656).

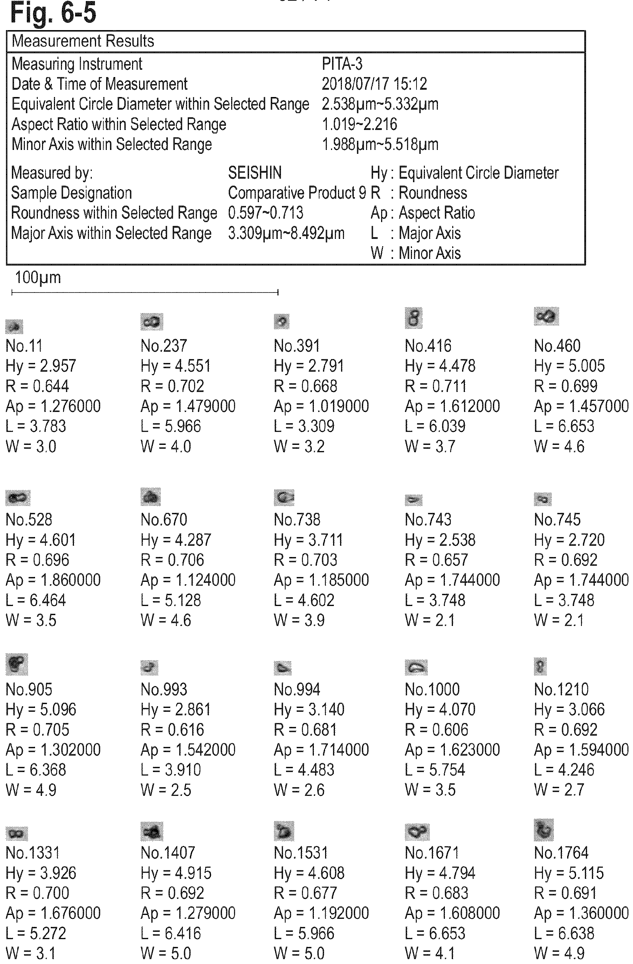

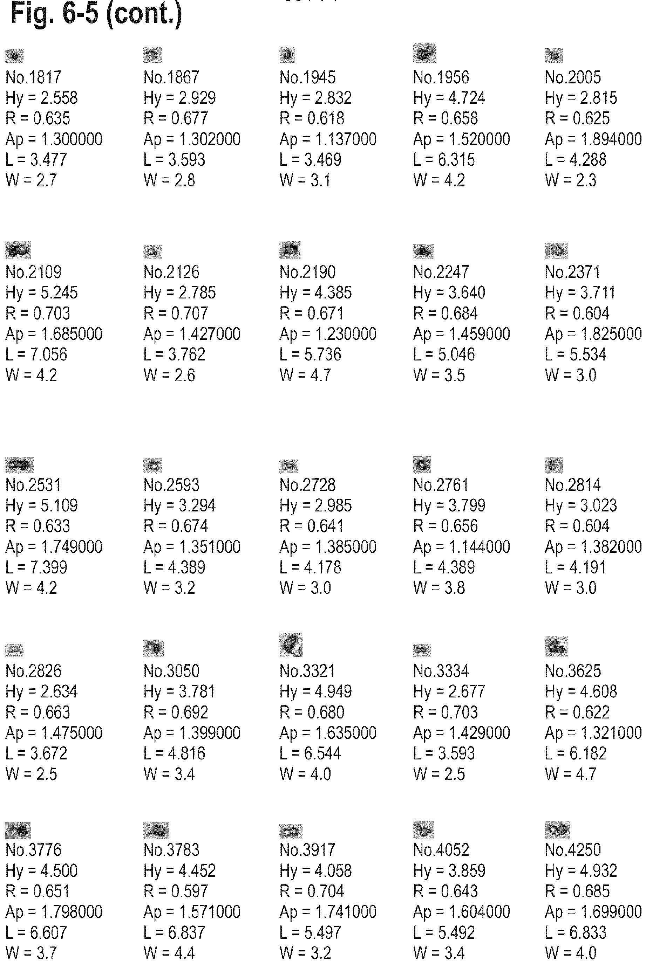

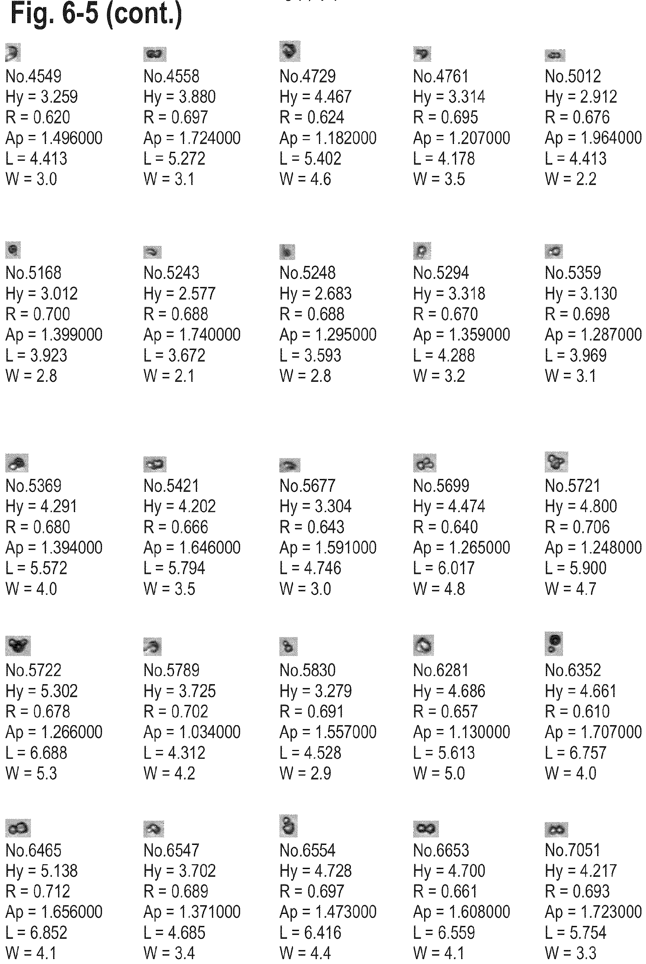

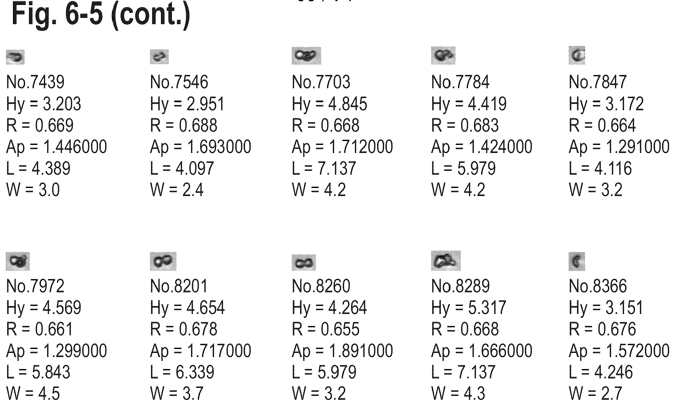

[Fig. 6-5] This figure shows the CCD camera captured images of the dextrin particles prepared in Comparative Example 1 (aspect ratio: 1.019 to 2.216).

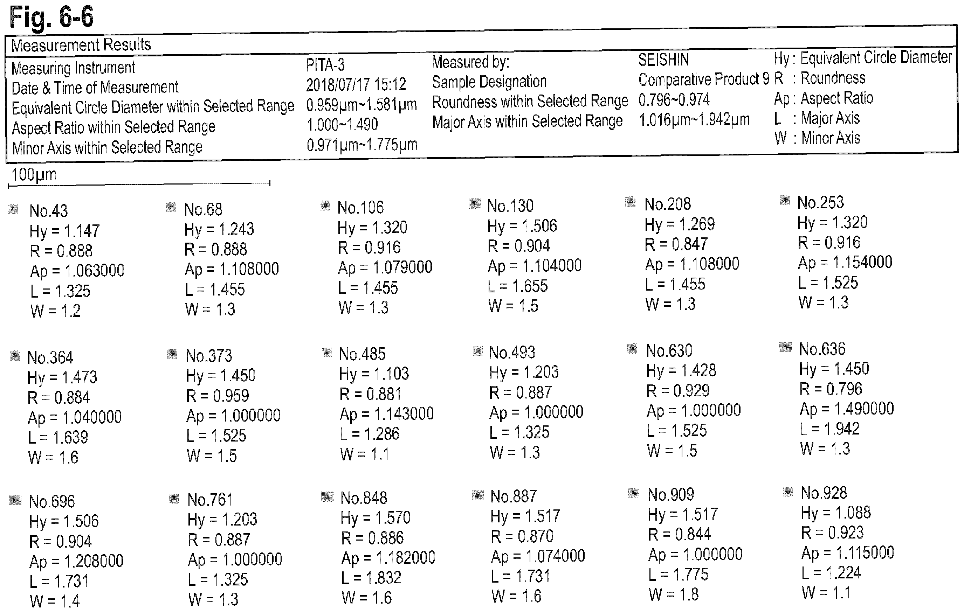

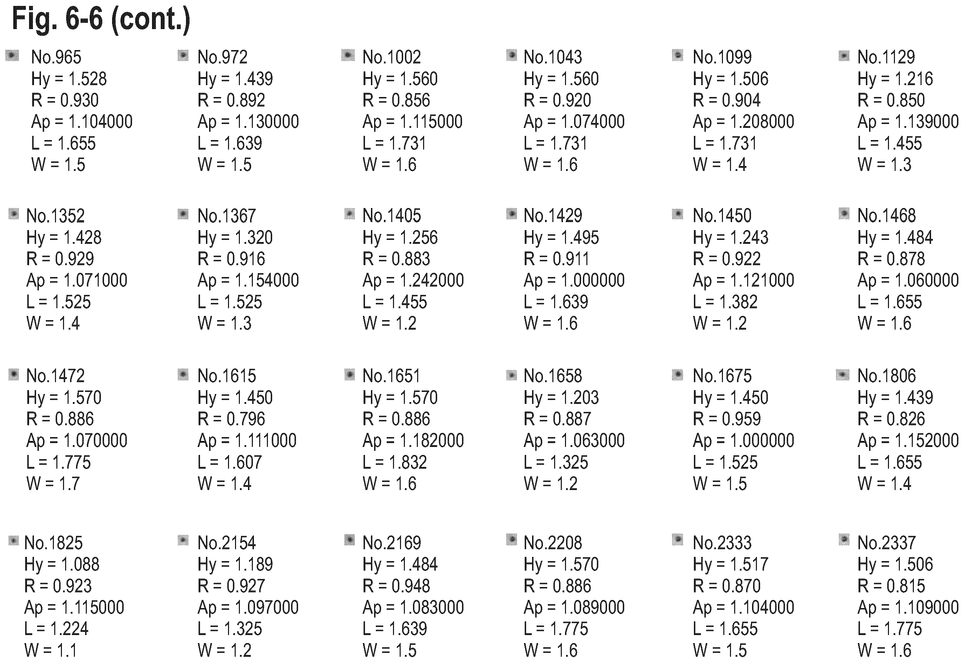

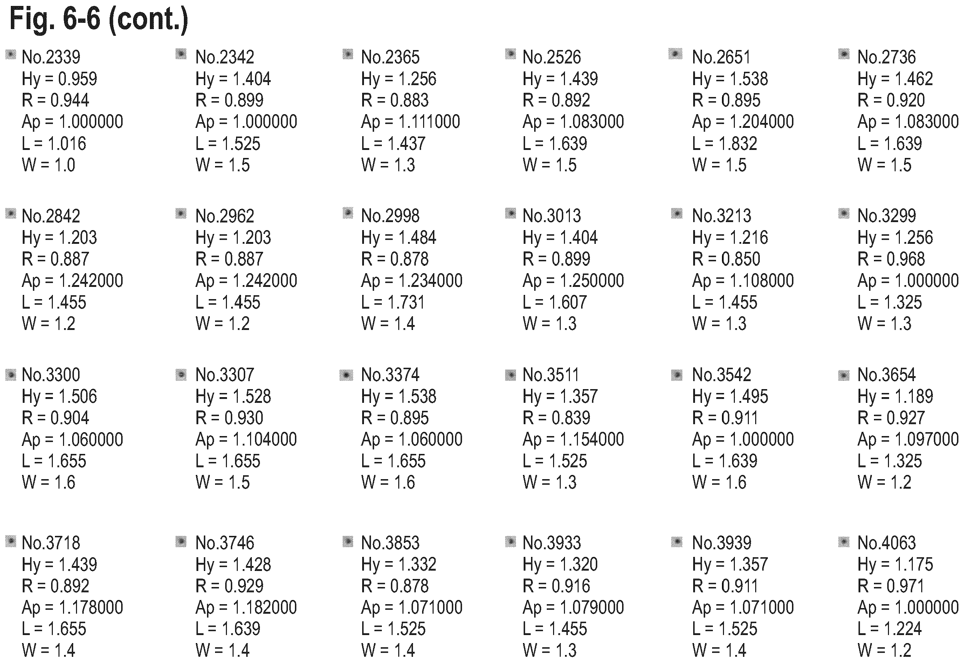

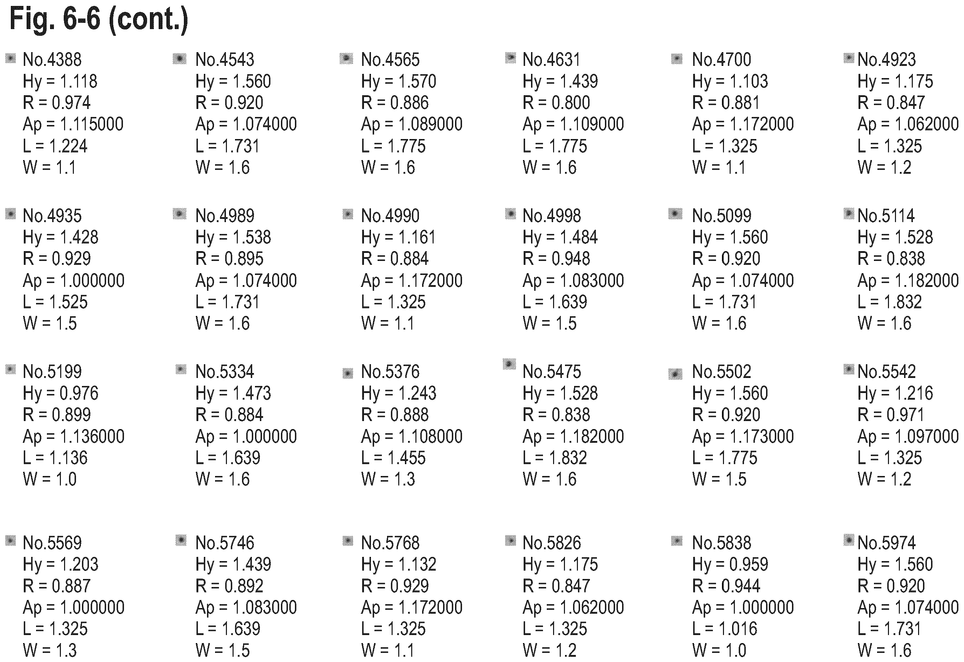

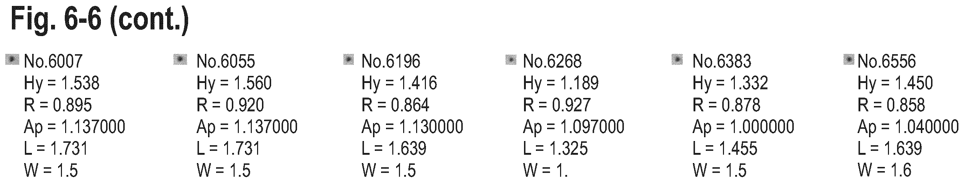

[Fig. 6-6] This figure shows the CCD camera captured images of the dextrin particles prepared in Comparative Example 1 (aspect ratio: 1.000 to 1.490).
[Fig. 6-7] This figure shows the CCD camera captured images of the dextrin particles prepared in Comparative Example 1 (aspect ratio: 3.103 to 3.543).

### BEST MODES FOR CARRYING OUT THE INVENTION

Hereinbelow, the present invention will be described in detail.

The present invention provides a dextrin powder obtainable by spray drying a dextrin solution, wherein dextrin particles with a length to thickness ratio of 3 or more are contained in a proportion of 3% or more (as based on the number of the particles).

In the dextrin powder of the present invention, dextrin particles with a length to thickness ratio (aspect ratio) of 3 or more are contained in a proportion of 3% or more (as based on the number of the particles), preferably 5% or more (as based on the number of the particles), more preferably 10% or more (as based on the number of the particles), and still more preferably 15% or more (as based on the number of the particles). The dextrin particles with a length to thickness ratio (aspect ratio) of 3 or more (hereinafter, sometimes referred to as "fibrous dextrin particles") may assume a thread-like, elongated state as shown in Figs. 5 and 6. The thread-like, elongated state of the fibrous dextrin is clearly different from the shapes of spherical dextrin or sheet-like dextrin. Speaking of the sheet-like dextrin, it is mostly composed of a planar structure with a polygonal cross-section enclosed by straight lines whereas the fibrous dextrin particles are mostly composed of a structure with curved surfaces and may assume a circular, elliptical or otherwise shaped cross-section whose profiles are enclosed by curved lines.

The aspect ratio of a particle may be expressed as a numerical value obtained by dividing its length (maximum length) by its thickness (maximum vertical length). The proportion of dextrin particles (as based on their number) having an aspect ratio of 3 or more can be measured by the dynamic image analysis method (a method in which particle diameters, particle shapes, and the like are determined by particle images obtained from microscopes, projectors, etc.). In the Examples to be described later, PITA-3 (Seishin Enterprise Co., Ltd.) was used as a particle analyzer in dynamic image analysis.

Fibrous dextrin particles can be prepared by spray drying a dextrin solution. The viscosity of the dextrin solution to be spray dried may be 150 mPa·s or more. The upper limit is not particularly limited. Any high viscosity may be used as long as dextrin is at concentrations within a range in which it can be sprayed with a spray dryer. Even when a dextrin solution has a high viscosity beyond the measuring limit, it is possible to fiberize dextrin. The viscosity of dextrin solution may, for example, range from 150 to 10000 mPa·s, preferably from 150 to 6000 mPa·s, and more preferably from 150 to 4000 mPa·s. The viscosity of dextrin solution may be measured with a type-B viscometer (Toki Sangyo; TVB-10) at 12 rpm with the temperature of solution at 20°C. The fibrous dextrin particles can be obtained in a state of powder. When the dextrose equivalent (DE) of the dextrin in a dextrin solution increases, the viscosity of the solution decreases. When the temperature of the dextrin solution increases, the viscosity of the solution decreases. Further, the viscosity increases depending on the dextrin concentration in the dextrin solution. The concentration of dextrin solution to be spray dried is suitably 40±4% by mass or more, preferably 40±4 to 65±6.5% by mass, and more preferably 50±5 to 60±6% by mass.

The solvent for dextrin solution may be water or a mixture of water and other solvents (such as ethanol, methanol, propanol, etc.). Dextrin, the solute, is not particularly limited. For example, carbohydrates obtainable by hydrolysis of starch, dextrin or glycogen may be used. The DE (dextrose equivalent) of dextrin is suitably 2-30, preferably 5-30, and more preferably 10-13. DE may be measured by the Somogyi method. The weight-average molecular weight of the solute dextrin is suitably 4,000-100,000, preferably 17,000-100,000. The raw material from which the solute dextrin is derived is not particularly limited. For example, corn, sweet potato, tapioca, wheat, rice, or the like may be enumerated.

Spray drying may be performed with any spray dryer (e.g., nozzle type sprayer or one using a disk (rotary atomizer system)). The inlet temperature of the drying chamber of a spray dryer is suitably 100-250°C, preferably 140-220°C, and more preferably 160-200°C.

The liquid temperature of a dextrin solution during spray drying may be 0-100°C, preferably 20-100°C.

In the dextrin powder of the present invention, the fibrous dextrin particles are contained in a proportion of 3% or more (as based on the number of the particles). The dextrin particles contained in the dextrin powder of the present invention may be either fibrous particles alone or a mixture thereof with other shapes of particles (such as spherical, sheet-like, etc.). The content of the fibrous dextrin particles is preferably 5% or more (as a proportion based on the number of the particles), more preferably 10% or more (as a proportion based on the number of the particles), still more preferably 15% or more (as a proportion based on the number of the particles).

The thickness of the fibrous dextrin particles is not particularly limited. However, the lower limit of thickness is, for example, 0.01 µm, preferably 0.1 µm; and the upper limit of thickness is, for example, 1,000 µm, preferably 100 µm. The thickness of the fibrous dextrin particles can be within various numerical range such as 0.01 µm-1,000 µm, 0.01 µm-100 µm, 0.1 µm-1000 µm, and 0.1 µm-100 µm. The thickness of the fibrous dextrin particles is conceptually the same as minor axis (maximum vertical length); minor axis can be expressed as the maximum distance between two straight lines parallel to the maximum length (major axis) between which a particle is held.

The length of the fibrous dextrin particles also is not particularly limited. However, the lower limit of length is, for example, 0.12 µm, preferably 1.2 µm; and the upper limit of length is, for example, 30,000 µm, preferably 3,000 µm, and still more preferably 500 µm. The length of the fibrous dextrin particles can be within various numerical ranges such as 0.12 µm-30,000 µm, 0.12 µm-3,000 µm, 1.2 µm-30,000 µm, 1.2 µm-3,000 µm, and 1.2 µm-500 µm. The length of the fibrous dextrin particles is conceptually the same as major axis (maximum length); major axis can be expressed as the maximum length between any two points on the profile line of the projected image of the relevant particle.

The length of the fibrous dextrin particles is suitably at least 3 times the thickness thereof, preferably at least 3.5 times, more preferably at least 4 times, and even more preferably at least 5 times the thickness thereof. Further, the length of the fibrous dextrin particles may be at least 7 times, or even at least 10 times the thickness. The upper limit of the length to thickness ratio (length/thickness) (aspect ratio) is not particularly limited. The ratio is suitably 10,000, preferably 1,000, more preferably 100, still more preferably 50.

The thickness and length of the dextrin particles may be measured by observation with an FE type scanning electron microscope or by imaging with a CCD camera. The moisture content of the dextrin powder is suitably 0-10% by mass, preferably 3-8% by mass, more preferably 4-6% by mass.

The moisture content of the dextrin powder may be determined with a halogen moisture meter HG63 (Mettler Toledo) by heating approximately 2 g of dextrin particles at 120°C for 3 minutes.

The dispersibility of the dextrin powder of the present invention may be evaluated "suitable" when 0-20 lumps are formed, "preferable" when 0-5 lumps are formed, and "more preferable" when 0-1 lump is formed in a dispersibility test. The dispersibility may be measured by the method described in Examples to be provided later.

The dextrin powder of the present invention may be used for improving food texture. For example, the fibrous dextrin particles may be added to thickeners containing xanthan gum particles for the specific purpose of aiding the dispersibility and solubility of the xanthan gum particles. Briefly, by adding the dextrin powder of the present invention, it is possible to prevent xanthan gum particles in liquid food from adhering together to form lumps, whereby the dispersibility of xanthan gum particles in the liquid food is improved. As a result of this improvement of dispersibility, solubility can be enhanced. Therefore, the present invention also provides thickeners comprising the above-described fibrous dextrin powder. The thickener of the present invention may comprise dextrin particles with a shape other than fibrous shape.

The thickener of the present invention may be used to improve food texture for the purpose of medical care/nursing care or for the purpose of general food processing. For example, the thickener of the present invention may be used for changing the texture of liquid foods into a sol- or gel-like texture. For the purpose of medical care/nursing care, the texture of liquid foods that can potentially cause aspiration as in persons with swallowing difficulties and elderly persons (e.g., drink, soup, liquid contained in solid food, etc.) may be changed into a sol- or gel-like texture.

As a solating agent that induces solation, the main agent xanthan gum may suitably be used. The term "main agent" means a major component for improving food texture, and does not mean that its quantity accounts for a major portion. Therefore, the amount of xanthan gum may be less than the amount of other components such as dextrin. As described above, xanthan gum, when in the state of a fine powder, easily form lumps in aqueous solution, thus lacking dispersibility and solubility. To improve such dispersibility and solubility of xanthan gum, the thickener of the present invention preferably uses xanthan gum as a granulated product. It is more preferable to perform granulation in such a way as to make porous particles capable of improving solubility. The method of granulating xanthan gum is not particularly limited. For example, a method used for forming porous particles capable of enhancing solubility may suitably be used (e.g., the flow coating granulation method using a flow coater). The particle size of the granulated product may be selected in any desired manner using solubility and dispersibility in liquid food and other indicators. For example, the diameter may be 250-1000 µm.

Xanthan gum particles and dextrin particles may be mixed with a mixer or the like. The mixing ratio may be selected at any values within the range in which the dispersibility of xanthan gum particles can be aided. For example, in view of dispersibility in liquid food and appropriate viscosity formation after dissolution, the mixing ratio may be 1:9-7:3, preferably 2:8-5:5, more preferably 7:13 (35:65) as a weight ratio of xanthan gum particles and dextrin particles.

The thus prepared thickener of the present invention rapidly disperses in liquid food even at low temperatures upon addition of about 1-3% relative to the liquid food. Further, the thickener of the present invention dissolves easily without leaving anything like lumps behind upon mixing for several minutes with a simple device such as a stirrer instead of using a sophisticated machine. Thus, the thickener is capable of inducing homogenous solation of the liquid food. The resultant solated food exerts the characteristics of xanthan gum effectively, and a stable viscosity is retained within the range of temperatures at which meals at eaten. Further, this solated food is so low in stickiness that it is much easier to swallow. What is more, the solated food is extremely low in roping property (roping is a problem that accompanies the use of conventional thickeners) and, hence, improves the working efficiency and hygiene of meal care.

The thickener of the present invention may be used in homes, hospitals and even in food processing factories or the like. The application of the thickener of the present invention is not limited to the purposes of medical/nursing care or industrial purposes and it may also be used in general cooking materials as a substitute for starch or arrowfoot flour. Since the thickener of the present invention is capable of retaining a more stable thickness than starch or arrowfoot flour, it becomes possible to prevent confectionery and cooked food from undergoing rheology modification due to temperature changes after cooking to thereby provide a stable texture and other advantages.

Further, the thickener of the present invention may be used not only to induce solation but also to induce gelation. In thickeners for inducing gelation, a gelling agent must be added in addition to the above-described dextrin particles. This gelling agent may be any edible substance that is capable of inducing gelation of food. For example, xanthan gum, locust bean gum, carrageenan, gellan gum, agar, gelatin and the like may be used either alone or in combination. These gelling agents may be either in the form of a powder or made into particles as in the case of the above-described solating agent.

The gelling agent is added to the dextrin particles and mixed together. The mixing ratio is suitably 1:9 to 7:3, preferably 2:8 to 5:5, as a weight ratio of gelling agent to dextrin particles.

Take as an example a gelling agent that is composed of xanthan gum, locust bean gum and agar in combination, the proportions of locust bean gum, agar, xanthan gum and dextrin are suitably about 2:3:6:10. However, these are not the sole proportions that can be adopted and they may be varied within a range in which gelation can be induced.

The thickener for gelation that is composed as described above can rapidly disperse in warmed liquid food upon addition at 0.5-1.5% relative to the liquid food. It can dissolve upon simple stirring without using a sophisticated machine. By decreasing the temperature of the liquid food after dissolution, a gelatin jelly-like gel can be formed. The thus gelated food can be improved to become easier to swallow because it is almost as sticky as agar and is capable of aggregating as efficiently as gelatin. Further, when a once cooled gelated food is re-warmed, the gel can dissolve extremely slowly and can retain stability even at around 60°C. As a result, a warm liquid food can be improved into a warm gelated food, an achievement that has so far been difficult to realize by means of gelatin.

The thickener of the present invention may be used not only in foods but also in cosmetics, pharmaceuticals and other industrial products.

The present invention also provides foods comprising the above-described dextrin powder. The food of the present invention may comprise dextrin particles with a shape other than fibrous shape.

The food of the present invention may be any food or drink. In particular, the food of the present invention may be for use in enteral nutrition, as exemplified by liquid diets for those who have difficulty in taking food from the mouth, e.g., patients with swallowing difficulties, patients with chronic bowel diseases, and elderly persons, and such liquid diets may be any of natural food type (using ordinary food), semi-digested type (using somewhat degraded food product) or digested type (that can be absorbed as such without being degraded).

Further, since the fibrous dextrin powder of the present invention has a suitable degree of oil absorbing property, they may also be applicable to foods such as sauce powder, soup powder, bread, donuts, confectionery, or the like.

### EXAMPLES

Hereinbelow, the present invention will be described more specifically with reference to the following Examples. However, the present invention is not limited to these Examples.

### [Examples 1 and 2] Preparation of Dextrin Powder

### Methods

Dextrin (DE10 to 13) (weight-average molecular weight: 17,000) (Sundeck #100; Sanwa Starch Co.) was dissolved in water to give solution concentrations (% by mass) of 55% (Example 1) and 50% (Example 2) (temperature: 20°C; viscosity: 392 mPa·s in Example 1 and 170 mPa·s in Example 2). Spraying was performed with a mini-spray dryer (B-290; Nihon Büchi com.) under the following conditions: nozzle hole diameter 0.7 mm, feeding rate 6 ml/min, aspirator 100%, dryer's inlet temperature 200°C, and dryer's outlet temperature 140°C. As a result, dextrin powders were obtained (product of Example 1 and product of Example 2).

As comparative product 1, a dextrin powder was obtained in the same manner as described for products of Examples 1 and 2 except that a dextrin solution with a solution concentration (% by mass) of 46% (temperature: 20°C; viscosity: 80 mPa·s) was used.

Shape observation and aspect ratio distribution: PITA-3 (Seishin Enterprise Co., Ltd.) was used for measurement. Aspect ratio is a numerical value obtained by dividing the maximum length of a particle by its maximum vertical length. Particle shapes were observed by capturing particle images with a monochrome CCD camera (1380 x 1040 4.65 square pixels) at a maximum of 31 fps.

Oil absorbing capacity (g): The amount of refined rape oil that was added dropwise to 3 g of dextrin until the whole dextrin became putty-like.

Dispersibility test: A sample (35 g) and xanthan gum particles* (15 g) were mixed. Six grams of the resultant mixture was added to 294 g of distilled water in a 300 ml tall beaker, which was left standing for 5 sec, followed by stirring with a spatula at 3 rotations/sec for 10 sec. Then, the number of lumps formed was counted.
*Xanthan gum particles were granulated using xanthan gum 75%, dextrin (Sundeck #100) 20% and trisodium citrate 5% with a fluidized bed granulator.

### Results

The results are summarized in the Table below.

**(Table 1)**

| | Proportion (as based on number) of particles whose aspect ratio is 3 or more | Oil absorption | Dispersibility * 1 |
|---|---|---|---|
| Product of Example 1 | 17.35% | 4.4 g | ○ |
| Product of Example 2 | 3.56% | 3.4 g | ○ |
| Comparative Product 1 | 0.03% | 2.7 g | × |

| | | | |
|---|---|---|---|
| *1 ○: no lump; ×: 20 or more lumps | | | |

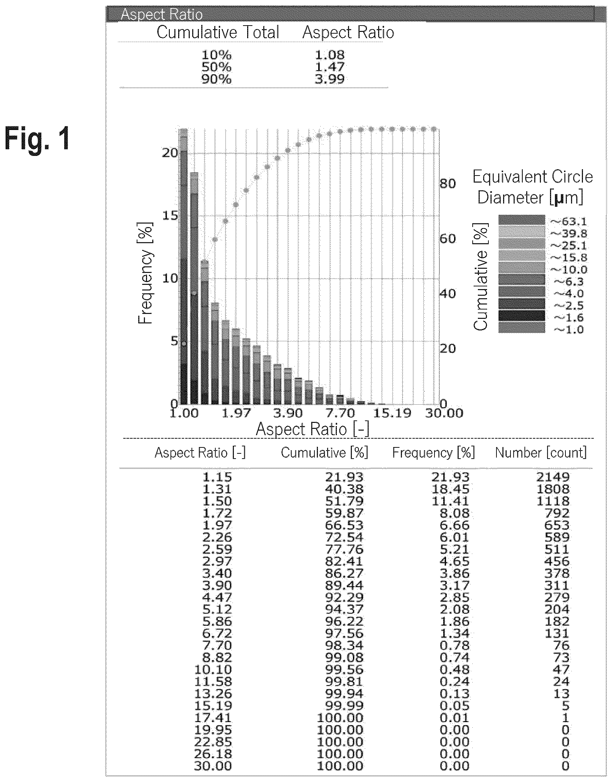

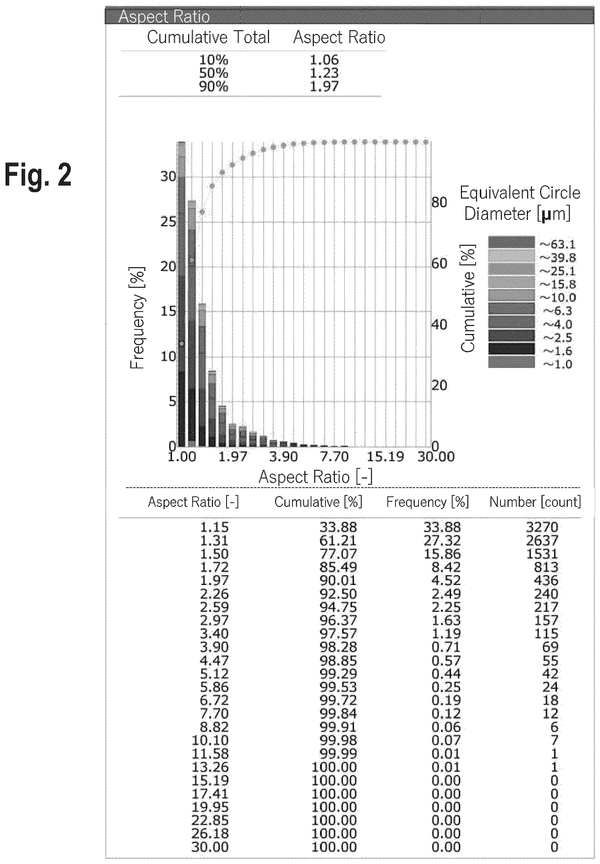

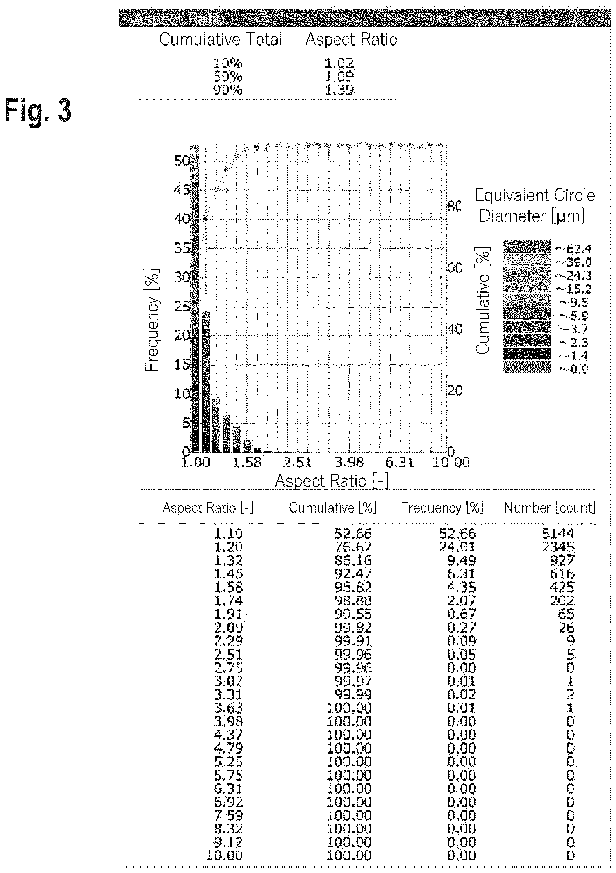

Aspect ratio distributions in product of Example 1, product of Example 2 and comparative product 1 are shown in Figs. 1 to 3, respectively.

The results of shape observation for product of Example 1, product of Example 2 and comparative product 1 are shown in Figs. 4 to 6, respectively.

The products of Examples 1 and 2 had good dispersibility and no lumps were observed. The dispersibility of comparative product 1 was poor (Table 1). The fibrous dextrin particles have large surface areas whereas the spherical dextrin particles have small surface areas, so it is believed that the larger the surface areas of dextrin particles, the greater the effect that is provided for increasing the dispersibility of xanthan gum particles in water.

As regards oil absorption, products of Examples 1 and 2 absorbed more oil than comparative product 1, showing an appropriate oil absorption property (Table 1).

### [Example 3] Preparation of a Food

A tea provided with an appropriate viscosity can be prepared by adding 3 g of a thickener (as mixed with xanthan gum particles prepared in the dispersibility test in Examples 1 and 2) to 150 g of tea and stirring the mixture with a spoon for 30 sec.

All publications, patents and patent applications cited herein are incorporated herein by reference in their entirety.

### INDUSTRIAL APPLICABILITY

The fibrous dextrin powder of the present invention is applicable as thickeners.

## Claims

1. A dextrin powder obtainable by spray drying a dextrin solution, wherein dextrin particles with a length to thickness ratio of 3 or more are contained in a proportion of 3% or more (as based on the number of the particles).

2. The dextrin powder of claim 1, wherein dextrin particles with a length to thickness ratio of 3 or more are contained in a proportion of 5% or more (as based on the number of the particles).

3. The dextrin powder of claim 2, wherein dextrin particles with a length to thickness ratio of 3 or more are contained in a proportion of 10% or more (as based on the number of the particles).

4. The dextrin powder of claim 3, wherein dextrin particles with a length to thickness ratio of 3 or more are contained in a proportion of 15% or more (as based on the number of the particles).

5. A thickener comprising the dextrin powder of any one of claims 1 to 4.

6. A food comprising the dextrin powder of any one of claims 1 to 4.
